# EUROPÄISCHE PATENTANMELDUNG

(11) **EP 4 683 341 A1**
(43) Veröffentlichungstag der Anmeldung: **21.01.2026**
(21) Anmeldenummer: 25189380.6
(22) Anmeldetag: 14.07.2025
(51) Int. Cl.: H04N 23/84, H04N 9/64, G06T 3/4015

(54) **VERFAHREN ZUM VERARBEITEN UND SPEICHERN VON BILDDATEN, UND KAMERASYSTEM**

(30) Priorität: 19.07.2024 DE 102024120612
(71) Anmelder: Arnold & Richter Cine Technik GmbH & Co. Betriebs KG, 80807 München (DE)
(72) Erfinder: SEYBOLD, Tamara, 81243 München (DE); EINGARTNER, Thomas, 81541 München (DE); BRENDEL, Harald, 80336 München (DE)
(74) Vertreter: Manitz Finsterwald Patent- und Rechtsanwaltspartnerschaft mbB

(57) **Zusammenfassung**

Bei einem Verfahren zum Verarbeiten und Speichern von Bilddaten erfolgt ein Bereitstellen von Sensorbilddaten eines Bildsensors einer Kamera, wobei die Sensorbilddaten eine erste räumliche Auflösung besitzen und wenigstens drei Farbkanäle umfassen, wobei die Sensorbilddaten für jeden Bildpunkt nur einen Signalwert aus einem der wenigstens drei Farbkanäle der Sensorbilddaten umfassen. Basierend auf den Sensorbilddaten werden Farbbilddaten erzeugt, die einer zweiten räumlichen Auflösung entsprechen und wenigstens drei Farbkanäle umfassen, wobei die Farbbilddaten für jeden Bildpunkt wenigstens drei Signalwerte umfassen, wobei die zweite räumliche Auflösung geringer ist als die erste räumliche Auflösung. Basierend auf den Sensorbilddaten werden ferner Ergänzungsbilddaten erzeugt, die einer dritten räumlichen Auflösung entsprechen und nur einen einzigen Farbkanal umfassen, wobei die Ergänzungsbilddaten für jeden Bildpunkt nur einen Signalwert umfassen. Die Farbbilddaten und die Ergänzungsbilddaten werden derart gespeichert, dass auf die Farbbilddaten unabhängig von den Ergänzungsbilddaten zugegriffen werden kann.

## Beschreibung

Die Erfindung betrifft ein Verfahren zum Verarbeiten und Speichern von Bilddaten basierend auf Sensorbilddaten eines Bildsensors einer Kamera. Die Erfindung betrifft ferner ein entsprechendes Kamerasystem.

Bei kinematographischen Produktionen (auch als Filmproduktionen bezeichnet) werden herkömmliche oder elektronische Bewegtbildkameras eingesetzt. Eine digitale Bewegtbildkamera umfasst einen elektronischen Bildsensor zum Erzeugen von Sensorbilddaten sowie einen Signalausgang zum Ausgeben der Sensorbilddaten und/oder einen Speicher zum Speichern der Sensorbilddaten während einer Aufnahme einer Bewegtbildszene. Der Bildsensor weist eine Vielzahl von lichtempfindlichen Sensorelementen auf, beispielsweise als eine zweidimensionale Matrix. Der Bildsensor kann eine Farbfiltermatrix (engl. Color Filter Array, CFA) aufweisen, mit mindestens drei unterschiedlichen spektralen Filtern in einem sich wiederholenden Muster, beispielsweise nach dem sogenannten Bayer-Muster (RGGB-Anordnung).

Die erzeugten Sensorbilddaten entsprechen elektrischen Bildsignalen der lichtempfindlichen Sensorelemente. Die Sensorelemente erzeugen die Bildsignale in Abhängigkeit von einfallendem Licht. Die Bewegtbildkamera kann ein integriertes Objektiv aufweisen, das eine Szene auf den Bildsensor abbildet, oder einen Objektivanschluss zum Befestigen eines Wechselobjektivs. Die Kamera kann eine Bewegtbildsequenz aufnehmen, die aus Einzelbildern besteht, wobei die Einzelbilder beispielsweise jeweilige Vollbilder sein können, oder Halbbilder, die nur zusammen mit anderen Halbbildern einen vollständigen Bildinhalt enthalten. Die Bilddaten eines jeden Einzelbildes können einen Bilddatensatz bilden.

Abgesehen von einer Verstärkung und Digitalisierung können die Bildsignale der lichtempfindlichen Sensorelemente grundsätzlich ohne weitere Aufbereitung als Sensorbilddaten aufgezeichnet werden. Es ist allerdings auch möglich, dass an den Sensorbilddaten gewisse Korrekturen vorgenommen werden, beispielsweise um physikalische Fehler des Bildsensors zu kompensieren, wie etwa Verstärkungs- oder Offset-Inhomogenitäten oder gänzlich defekte Sensorelemente.

Die Sensorbilddaten können ferner so verarbeitet werden, dass eine Farbbildsequenz entsteht, die an einer geeigneten Anzeigeeinrichtung (beispielsweise Monitor, Sucher) wiedergegeben werden kann, damit dort eine aufgezeichnete Bewegtbildszene im Wesentlichen korrekt betrachtet werden kann. Da bei Verwendung eines Bildsensors mit Farbfiltermatrix für jeden Bildpunkt (Bildort) nur ein einziger Signalwert vorliegt (Mosaikbilddaten) und für die Darstellung eines farbigen Bildes jedoch mindestens drei Signalwerte pro Bildpunkt benötigt werden, ist eine Ergänzung der Sensorbilddaten durch Interpolation erforderlich (sogenanntes Debayern; engl. demosaicing). Ein derartiger Interpolationsprozess kann bereits in der Kamera vor dem Aufzeichnen, d.h. vor dem Ausgeben bzw. Speichern der Sensorbilddaten, durchgeführt werden. In diesem Fall werden also bereits mindestens drei Signalwerte pro Bildpunkt ausgegeben bzw. gespeichert.

Bei der Verwendung von hochauflösenden Bildsensoren fallen hohe Datenmengen an. Daher werden die Sensorbilddaten (Mosaikbilddaten oder interpolierte Bilddaten) oftmals bereits in der Kamera vor dem Ausgeben bzw. Speichern komprimiert. Hierbei wird typischerweise versucht, redundante Informationen zu identifizieren und diese nicht aufzuzeichnen. Es ist auch möglich, das menschliche Sehvermögen bei der Datenkompression zu berücksichtigen und auch solche Bildinhalte, die der spätere Betrachter nicht wahrnehmen kann, bei der Aufzeichnung zu verzichten.

Durch die Verwendung einer Farbfiltermatrix können zwar Farbinformationen erzeugt werden; allerdings entsteht hierdurch auch eine spektral abhängige Limitierung der Auflösung des Bildsensors und somit der erzeugten Sensorbilddaten. Um eine ausreichende oder erwünschte Auflösung bei den interpolierten Bilddaten zu erreichen, ist eine entsprechende Überabtastung im Bildsensor erforderlich. Dadurch entstehen jedoch hohe Mengen an Bilddaten. Der geringste Aufwand entsteht bei der Aufzeichnung in der Kamera, wenn die Sensorbilddaten ohne weitere Verarbeitung ausgegeben bzw. gespeichert werden, also als Rohbilddaten. Ein Nachteil derartiger Rohbilddaten ist, dass zeitgleich zu der Aufzeichnung einer Szene kein betrachtbares Farbbild entsteht, beispielsweise zur Beobachtung an einem Sucher oder einem Monitor. Wenn die Sensorbilddaten vor der Aufzeichnung interpoliert werden, entsteht zwar ein betrachtbares Bild (RGB-Bild). Jedoch erfordert dies zum einen einen erheblichen Prozessierungsaufwand; zum anderen wird die Menge an Bilddaten, die dann aufgezeichnet (ausgegeben oder gespeichert) werden muss, vervielfacht. Wenn eine Datenkompression angewendet wird, um die Menge an Bilddaten zu verringern, entstehen wiederum andere Nachteile. Werden beispielsweise Rohbilddaten komprimiert, muss eine Korrelation der verschiedenen Farbkanäle angenommen werden, sodass Ungenauigkeiten eingeführt werden. Werden hingegen interpolierte Bilddaten komprimiert, ist die Effizienz geringer, da die Datenmenge vor dem Komprimieren bereits vervielfacht worden ist. Ferner kann es erforderlich sein, bestimmte Farbraumverschiebungen auf die Bilddaten aufzuprägen, um das Interpolationsergebnis zu verbessern. Diese Verschiebungen können nach dem Dekomprimieren (Dekodieren) der Bilddaten eventuell nicht mehr rückgängig gemacht werden.

Es ist eine Aufgabe der Erfindung, ein Verfahren zum Verarbeiten und Speichern von Bilddaten anzugeben, dass die vorgenannten Nachteile vermeidet oder verringert.

Die Aufgabe wird durch ein Verfahren mit den Merkmalen des Anspruchs 1 gelöst.

Das Verfahren zum Verarbeiten und Speichern von Bilddaten umfasst die Schritte:
- Bereitstellen von Sensorbilddaten eines Bildsensors einer Kamera, wobei die Sensorbilddaten eine erste räumliche Auflösung besitzen und wenigstens drei Farbkanäle umfassen, wobei die erste räumliche Auflösung einer Anzahl von ersten Bildpunkten entspricht und die Sensorbilddaten für jeden der ersten Bildpunkte nur einen Signalwert aus einem der wenigstens drei Farbkanäle der Sensorbilddaten umfassen;
- basierend auf den Sensorbilddaten Erzeugen von Farbbilddaten, die einer zweiten räumlichen Auflösung entsprechen und wenigstens drei Farbkanäle umfassen, wobei die zweite räumliche Auflösung einer Anzahl von zweiten Bildpunkten entspricht und die Farbbilddaten für jeden der zweiten Bildpunkte wenigstens drei Signalwerte gemäß den wenigstens drei Farbkanälen der Farbbilddaten umfassen, wobei die zweite räumliche Auflösung der Farbbilddaten geringer ist als die erste räumliche Auflösung der Sensorbilddaten;
- basierend auf den Sensorbilddaten Erzeugen von Ergänzungsbilddaten, die einer dritten räumlichen Auflösung entsprechen und nur einen einzigen Farbkanal umfassen, wobei die dritte räumliche Auflösung einer Anzahl von dritten Bildpunkten entspricht und die Ergänzungsbilddaten für jeden der dritten Bildpunkte nur einen Signalwert gemäß dem einzigen Farbkanal der Ergänzungsbilddaten umfassen; und
- Speichern der Farbbilddaten und der Ergänzungsbilddaten derart, dass auf die Farbbilddaten unabhängig von den Ergänzungsbilddaten zugegriffen werden kann.

Das Verfahren basiert auf Sensorbilddaten, die beispielsweise während der Durchführung des Verfahrens von einem Bildsensor einer Kamera erzeugt werden oder die bereits zu einem früheren Zeitpunkt erzeugt worden sind. Das Verfahren kann somit weitgehend innerhalb einer Kamera oder aber auch teilweise oder vollständig in einer von der Kamera separaten Datenverarbeitungseinrichtung (beispielsweise Personal Computer, Workstation, Cloud Server) durchgeführt werden. Soweit das Verfahren innerhalb der Kamera durchgeführt wird, kann die Kamera hierfür eine Signalverarbeitungseinrichtung aufweisen, beispielsweise einen Mikroprozessor, eine zentrale Recheneinheit (CPU), eine Grafikprozessoreinheit (GPU), eine Anwendungsspezifische Integrierte Schaltung (ASIC) und/oder ein Field Programmable Gate Array (FPGA). Die Sensorbilddaten können insbesondere RGB-Bilddaten sein.

Die erzeugten Farbbilddaten ermöglichen eine Betrachtung des Bildinhalts an einer üblichen Anzeigeeinrichtung (beispielsweise Kamerasucher, Monitor). Somit kann beispielsweise die Aufnahme einer Bewegtbildszene während der Aufzeichnung ohne besonderen rechnerischen Zusatzaufwand kontrolliert werden. Hierfür ist also kein paralleler Bildverarbeitungspfad in der Kamera erforderlich. Ferner kann ein den Farbbilddaten entsprechendes Kontrollbild unmittelbar verteilt werden, beispielsweise um gleich nach der Aufzeichnung einer Bewegtbildszene mit der sogenannten Postproduktion beginnen zu können (Rohschnitt, Spezialeffekte, etc.). Auch die Farbbilddaten können insbesondere RGB-Bilddaten sein. Aufgrund der verringerten Auflösung der Farbbilddaten nehmen diese jedoch relativ wenig Bandbreite, Rechenkapazität und Speicherplatz in Anspruch. Die Farbbilddaten können somit auch leicht und schnell cloud-basiert verteilt werden. Die in den Farbbilddaten enthaltenen Farbinformationen erlauben auch Rückschlüsse auf eine Korrelation der Farbkanäle, was wiederum dazu verwendet werden kann, um die Bilddaten vor der Aufzeichnung effizient zu komprimieren.

Die erzeugten Ergänzungsbilddaten ermöglichen in Kombination mit den Farbbilddaten ein nachträgliches Aufbereiten der Farbbilddaten im Sinne einer Erhöhung des Informationsgehalts, insbesondere um die Auflösung zu erhöhen oder Helligkeitsverläufe zu korrigieren. Eine solche nachträgliche Aufbereitung der Farbbilddaten kann zu einem späteren Zeitpunkt und insbesondere außerhalb der Kamera, welche die Sensorbilddaten erzeugt, erfolgen, beispielsweise durch eine von der Kamera separate Datenverarbeitungseinrichtung (beispielsweise Personal Computer, Workstation, Cloud Server).

Die Farbbilddaten und die Ergänzungsbilddaten werden derart gespeichert, dass auf die Farbbilddaten unabhängig von den Ergänzungsbilddaten zugegriffen werden kann. Somit können die Farbbilddaten genutzt oder weiterverarbeitet werden, ohne dass notwendigerweise auf die Ergänzungsbilddaten zugegriffen wird. Die Farbbilddaten und die Ergänzungsbilddaten können separat und/oder zeitlich versetzt voneinander ausgegeben und/oder gespeichert werden. Die Farbbilddaten die Ergänzungsbilddaten können beispielsweise in einem Datenspeicher der Kamera oder in einem mit der Kamera leitungsgebunden gekoppelten Rekorder oder in einem mit der Kamera drahtlos gekoppelten Datenspeicher gespeichert werden. Entsprechendes gilt für die Ergänzungsbilddaten.

Da die Farbbilddaten und die Ergänzungsbilddaten nach ihrer Erzeugung unabhängig voneinander weiterverarbeitet, insbesondere gespeichert und/oder ausgegeben werden können, vereinfachen sich die Abläufe einer Filmproduktion. Mit den Farbbilddaten können schnell die ersten Bearbeitungsschritte durchgeführt werden, für die typischerweise noch nicht die höchste Qualitätsstufe des Filmmaterials benötigt wird. Durch die Zerlegung der Sensorbilddaten in die Farbbilddaten und die Ergänzungsbilddaten können auch jeweils besonders geeignete und somit effiziente Kompressionsverfahren zum Einsatz gelangen.

Die im vorliegenden Zusammenhang genannte jeweilige räumliche Auflösung der verschiedenen genannten Bilddaten entspricht generell der Anzahl von Bildpunkten (engl.: pixel) eines jeweiligen Bilddatensatzes, die einer vorbestimmten räumlichen Anordnung, insbesondere entlang von Spalten und Zeilen, zugeordnet sein können. Die genannten Bilddaten umfassen für jeden der Bildpunkte einen oder mehrere Bildsignalwerte, die einem Helligkeitswert entsprechen und gemeinsam einen Bildinhalt repräsentieren. Diese Bildsignalwerte können unterschiedlichen Farbkanälen zugeordnet sein und werden dementsprechend im vorliegenden Zusammenhang vereinfachend als Signalwerte bezeichnet. Bezogen auf einen Bildsensor, der die genannten Sensorbilddaten erzeugt hat, kann die genannte erste räumliche Auflösung insbesondere der physikalischen (nativen) Auflösung des Bildsensors gemäß der Anordnung von lichtempfindlichen Sensorelementen entsprechen, wenn der Bildsensor mit einer Farbfiltermatrix versehen ist. Beispielsweise können die Sensorbilddaten eine sogenannte 4K-Auflösung (ca. 4096 Bildpunkte in horizontaler Richtung, also 4096 Spalten), 6K-Auflösung (ca. 6144 Spalten) oder 8K-Auflösung (ca. 8192 Spalten) besitzen, jeweils in einem Seitenverhältnis von beispielsweise 4:3 oder 16:9 (also beispielsweise 2304 Zeilen bei 4096 Spalten).

Die im vorliegenden Zusammenhang genannten Farbkanäle der Sensorbilddaten entsprechen der möglichen unterschiedlichen Farbinformation am Ort der einzelnen Bildpunkte. Um ein Farbbild wiedergeben zu können, werden generell mindestens drei Farbkanäle benötigt, beispielsweise Rot, Grün und Blau. Ein Bildsensor, der mit einer Farbfiltermatrix versehen ist, die drei verschiedene Farbfilter umfasst, erzeugt Sensorbilddaten mit drei Farbkanälen, wobei die Sensorbilddaten für jeden Bildpunkt jedoch nur einen Signalwert umfassen, entsprechend dem Farbfilter am Ort des jeweiligen Bildpunkts bzw. (auf Sensorebene) am Ort des jeweiligen Sensorelements. Entsprechendes gilt für die genannten Farbkanäle der Farbbilddaten bzw. den einzigen Farbkanal der Ergänzungsbilddaten. Allerdings bedeutet dies nicht, dass jedem Farbkanal der Sensorbilddaten gleich viele Bildpunkte zugeordnet sein müssen. Stattdessen kann die relative Häufigkeit der jeweiligen spektralen Filter der Farbfiltermatrix sich unterscheiden, beispielsweise um eine bessere Annäherung an das menschliche Sehvermögen zu erreichen. Dementsprechend können die Sensorbilddaten für einen Farbkanal (insbesondere den Grün-Farbkanal) mehr Signalwerte umfassen als für die anderen Farbkanäle (insbesondere den Rot-Farbkanal und den Blau-Farbkanal).

Sofern die Sensorbilddaten Signalwerte unterschiedlicher Farben umfassen, ist im vorliegenden Zusammenhang jeder Farbe genau ein Farbkanal zugeordnet, d.h. eine einzelne Farbe wird als ein einziger Farbkanal angesehen und betrachtet. Dies gilt insbesondere auch für die Farbe Grün, auch wenn für diese Farbe mehr Signalwerte vorhanden sind als für andere Farben.

Soweit die erzeugten Farbbilddaten "einer zweiten räumlichen Auflösung entsprechen", bedeutet dies im vorliegenden Zusammenhang, dass die Farbbilddaten entweder als visuell beobachtbare Bilddaten die zweite räumliche Auflösung besitzen, oder dass die Signalwerte der Farbbilddaten trotz einer Filterung oder Zerlegung nach Ortsfrequenzen jeweiligen Bildpunktpositionen gemäß der zweiten räumlichen Auflösung zugeordnet sind. Entsprechendes gilt für die Ergänzungsbilddaten, die "einer dritten räumlichen Auflösung entsprechen".

Weitere vorteilhafte Ausführungsformen sind nachstehend erläutert.

Bei manchen Ausführungsformen kann das Verfahren ferner den Schritt des Erzeugens der Sensorbilddaten mittels eines Bildsensors einer Kamera umfassen, der wie bereits erläutert eine Vielzahl von lichtempfindlichen Sensorelementen umfasst, die in Spalten und Zeilen angeordnet sind. Der Bildsensor kann beispielsweise aus Silizium in CMOS- oder CCD-Technologie gefertigt sein.

Bei manchen Ausführungsformen können die Sensorbilddaten Signalwerte einer ersten Farbe, Signalwerte einer zweiten Farbe und Signalwerte einer dritten Farbe umfassen, wobei für einen jeweiligen Bilddatensatz der Sensorbilddaten die Anzahl von Signalwerten der ersten Farbe größer als die Anzahl von Signalwerten der zweiten Farbe und als die Anzahl von Signalwerten der dritten Farbe ist. Ein dieser ersten Farbe entsprechender Farbkanal wird nachfolgend für manche Ausführungsformen auch als der erste Farbkanal bezeichnet. Der Bildsensor kann wie bereits erläutert eine Farbfiltermatrix umfassen, insbesondere gemäß dem sogenannten Bayer-Muster, so dass die Sensorbilddaten generell doppelt so viele Grün-Signalwerte wie Rot-Signalwerte oder Blau-Signalwerte umfassen. Gemäß dem Bayer-Muster sind jeweils von vier in zwei Zeilen und zwei Spalten angeordneten Sensorelementen zwei diagonal zueinander angeordnete Sensorelemente mit einem grün transmittierenden Farbfilter versehen und von den beiden übrigen Sensorelementen ist eines mit einem rot transmittierenden und das andere mit einem blau transmittierenden Farbfilter versehen.

Bei manchen Ausführungsformen können die Sensorbilddaten für einen der wenigstens drei Farbkanäle mehr Signalwerte umfassen als für jeden weiteren der wenigstens drei Farbkanäle, wobei der einzige Farbkanal der Ergänzungsbilddaten diesem einen Farbkanal der Sensorbilddaten entspricht. Hierbei kann es sich insbesondere um den Grün-Farbkanal handeln.

Bei manchen Ausführungsformen können die Sensorbilddaten einer Bewegtbildsequenz zugeordnet sein, wobei während des Erzeugens von weiteren Sensorbilddaten der Bewegtbildsequenz bereits erzeugte Farbbilddaten (also basierend auf zuvor bereits erzeugten Sensorbilddaten erzeugte Farbbilddaten) an einer Anzeigeeinrichtung der Kamera wiedergegeben werden, beispielsweise an einem Monitor oder einem Sucher. Somit ermöglicht das Verfahren mit geringem zusätzlichen Rechenaufwand und geringer Latenz eine Kontrollbeobachtung einer aufgezeichneten Bewegtbildszene.

Bei manchen Ausführungsformen können die wenigstens drei verschiedenen Farbkanäle der Farbbilddaten den wenigstens drei verschiedenen Farbkanälen der Sensorbilddaten entsprechen oder hieraus abgeleitet sein. Insbesondere kann die Anzahl der Farbkanäle der Farbbilddaten identisch zu der Anzahl der Farbkanäle der Sensorbilddaten sein.

Soweit die wenigstens drei verschiedenen Farbkanäle der Farbbilddaten den wenigstens drei verschiedenen Farbkanälen der Sensorbilddaten "entsprechen oder hieraus abgeleitet sind", bedeutet dies im vorliegenden Zusammenhang, dass die Farbkanäle der Farbbilddaten jeweils die identische Farbinformation wie die Farbkanäle der Sensorbilddaten repräsentieren; oder dass durch gegenseitiges Verrechnen der Farbkanäle der Sensorbilddaten, insbesondere durch Bilden von Linearkombinationen, die Farbkanäle der Farbbilddaten eine modifizierte Farbinformation umfassen. In dem letztgenannten Fall kann das Verrechnen der Farbkanäle der Sensorbilddaten jedoch vollständig reversible Operationen umfassen. Beispielsweise können ein oder mehrere Grün-Signalwerte von einem jeweiligen Rot- oder Blau-Signalwert der Sensorbilddaten subtrahiert werden, um zu einem abgeleiteten Farbkanal der Farbbilddaten zu gelangen. Die Farbkanäle der Farbbilddaten können in diesem Zusammenhang auch als Farbebenen bezeichnet werden.

Entsprechendes gilt auch für die Ergänzungsbilddaten, d.h. der genannte einzige Farbkanal der Ergänzungsbilddaten kann einem der wenigstens drei verschiedenen Farbkanäle der Sensorbilddaten entsprechen oder hieraus abgeleitet sein.

Bei manchen Ausführungsformen kann die dritte räumliche Auflösung der Ergänzungsbilddaten höher sein als die zweite räumliche Auflösung der Farbbilddaten. Hierdurch können die Ergänzungsbilddaten besonders wirkungsvoll für ein nachträgliches Aufbereiten der Farbbilddaten verwendet werten. Allerdings kann die dritte räumliche Auflösung der Ergänzungsbilddaten bei manchen Ausführungsformen auch geringer sein als die zweite räumliche Auflösung der Farbbilddaten, beispielsweise wenn für nicht-dyadische Verhältnisse zwischen der ersten und der zweiten räumlichen Auflösung Signalwerte für zusätzliche Bildpunktpositionen erzeugt werden müssen, wie nachstehend noch erläutert wird.

Bei manchen Ausführungsformen kann die dritte räumliche Auflösung der Ergänzungsbilddaten der ersten räumlichen Auflösung der Sensorbilddaten entsprechen oder geringer sein als die erste räumliche Auflösung. Mit anderen Worten kann die dritte räumliche Auflösung der erzeugten Ergänzungsbilddaten einem Zwischenwert zwischen der zweiten räumlichen Auflösung der Farbbilddaten und der ersten räumlichen Auflösung der Sensorbilddaten entsprechen oder mit der ersten räumlichen Auflösung der Sensorbilddaten übereinstimmen.

Bei manchen Ausführungsformen können die Bildpunktpositionen der zweiten Bildpunkte (insbesondere die Bildpunktpositionen sämtlicher zweiten Bildpunkte) der Farbbilddaten gemäß der zweiten räumlichen Auflösung mit Bildpunktpositionen der ersten Bildpunkte der Sensorbilddaten gemäß der ersten räumlichen Auflösung übereinstimmen, und/oder die Bildpunktpositionen der dritten Bildpunkte (insbesondere die Bildpunktpositionen sämtlicher dritten Bildpunkte) der Ergänzungsbilddaten gemäß der dritten räumlichen Auflösung können mit Bildpunktpositionen der ersten Bildpunkte der Sensorbilddaten gemäß der ersten räumlichen Auflösung übereinstimmen.

Bei manchen Ausführungsformen können die Farbbilddaten niedrigen Ortsfrequenzen der Sensorbilddaten entsprechen, wobei die Ergänzungsbilddaten hohen Ortsfrequenzen der Sensorbilddaten entsprechen. Insbesondere können einige oder sämtliche der Farbbilddaten Ortsfrequenzwerte sein, die niedrigen Ortsfrequenzen der Sensorbilddaten entsprechen, wobei sämtliche der Ergänzungsbilddaten Ortsfrequenzwerte sind, die hohen Ortsfrequenzen der Sensorbilddaten entsprechen. Die Farbbilddaten repräsentieren somit großräumige Änderungen der Signalwerte und somit des Bildinhalts des jeweiligen Farbkanals, und die Ergänzungsbilddaten repräsentieren kleinräumige Änderungen der Signalwerte und somit des Bildinhalts des genannten einzigen Farbkanals. Die erzeugten Farbbilddaten können hierbei eine Information über Signalwerte von ersten Bildpunkten der Sensorbilddaten in der Umgebung eines betrachteten Bildpunkts gemäß dem jeweiligen Farbkanal enthalten, und die Farbbilddaten unterscheiden sich insofern beispielsweise von Signalwerten, die durch eine reine Unterabtastung der Sensorbilddaten ermittelt werden. Die in den Ergänzungsbilddaten enthaltene Information über hohe Ortsfrequenzen kann in Kombination mit den Farbbilddaten für ein nachträgliches Aufbereiten der Farbbilddaten genutzt werden.

Bei manchen Ausführungsformen können die Signalwerte gemäß dem einzigen Farbkanal der Ergänzungsbilddaten und die Signalwerte gemäß demjenigen Farbkanal der Farbbilddaten, welcher dem einzigen Farbkanal der Ergänzungsbilddaten entspricht, gemeinsam im Wesentlichen den Informationsgehalt des Farbkanals der Sensorbilddaten umfassen, welcher dem einzigen Farbkanal der Ergänzungsbilddaten entspricht. Somit lässt sich der betreffende Farbkanal der Sensorbilddaten im Wesentlichen vollständig rekonstruieren. Die Einschränkung "im Wesentlichen" bedeutet hierbei, dass je nach Art der Aufteilung und späteren Zusammenführung ein gewisser, insbesondere mathematisch bedingter Informationsverlust auftreten kann, beispielsweise im Falle der vorgenannten Unterteilung in niedrige und hohe Ortsfrequenzen und deren spätere neuerliche Kombination.

Bei manchen Ausführungsformen kann der Schritt des Erzeugens der Farbbilddaten basierend auf den Sensorbilddaten die folgenden Verarbeitungsschritte umfassen:
- Interpolieren der Sensorbilddaten, um für jeden der ersten Bildpunkte wenigstens zwei weitere Signalwerte zu ermitteln, so dass für jeden der ersten Bildpunkte und für jeden der wenigstens drei Farbkanäle der Sensorbilddaten ein jeweiliger Signalwert vorliegt;
- für jeden der wenigstens drei Farbkanäle der Sensorbilddaten Transformieren der Signalwerte einschließlich der interpolierten Signalwerte in Ortsfrequenzwerte, die niedrigen und hohen Ortsfrequenzen entsprechen; und
- Ermitteln der Farbbilddaten für jeden der wenigstens drei Farbkanäle der Farbbilddaten durch Auswählen von niedrigen Ortsfrequenzen entsprechenden Ortsfrequenzwerten;
wobei der Schritt des Erzeugens der Ergänzungsbilddaten basierend auf den Sensorbilddaten den folgenden Verarbeitungsschritt umfasst:
- Ermitteln der Ergänzungsbilddaten für den einzigen Farbkanal der Ergänzungsbilddaten durch Auswählen von hohen Ortsfrequenzen entsprechenden Ortsfrequenzwerten.

Bei derartigen Ausführungsformen werden die Sensorbilddaten vollständig interpoliert, damit für sämtliche der ersten Bildpunkte gemäß der (höheren) ersten räumlichen Auflösung drei Signalwerte vorliegen. Hierfür können die ermittelten zwei weiteren Signalwerte den Farbkanälen entsprechen, zu denen für den betreffenden ersten Bildpunkt noch kein Signalwert vorliegt. Das Interpolieren kann gemäß einem üblichen Verfahren erfolgen, um Mosaikbilddaten in RGB-Bilddaten zu überführen, wie eingangs erläutert. Das Interpolieren kann im vorliegenden Zusammenhang eine räumliche Filterung umfassen (innerhalb des jeweiligen Farbkanals oder unter zusätzlicher Berücksichtigung von Signalwerten auch anderer Farbkanäle). Die Signalwerte der Sensorbilddaten (originäre Signalwerte und interpolierte Signalwerte) werden für jeden der wenigstens drei Farbkanäle der Sensorbilddaten durch Transformation in unterschiedliche Ortsfrequenzen (räumliche Frequenzen; auch spatiale Frequenzen genannt) zerlegt. Die transformierten Signalwerte bilden somit Ortsfrequenzwerte, die unterschiedliche Ortsfrequenzen der Bildinformation repräsentieren, nämlich niedrige und hohe Ortsfrequenzen. Die Transformation kann beispielsweise direkt oder indirekt durch eine räumliche Tiefpassfilterung und eine räumliche Hochpassfilterung, oder generell durch eine räumliche Bandpassfilterung durchgeführt werden. Aus der somit nach Ortsfrequenzen separierten Bildinformation werden niedrige Ortsfrequenzen ausgewählt, beispielsweise durch Auswählen der den niedrigen Ortsfrequenzen zugeordneten Ortsfrequenzwerte nach deren Erzeugung oder unmittelbar durch die durchgeführte Transformation bzw. Filterung (entsprechend einem Tiefpass). Hierdurch können für jeden Farbkanal die Farbbilddaten der (geringeren) zweiten räumlichen Auflösung ermittelt werden. Hingegen werden die Ergänzungsbilddaten durch Auswählen von hohen Ortsfrequenzen der transformierten Signalwerte lediglich für den einzigen Farbkanal der Ergänzungsbilddaten ermittelt; dies kann wiederum durch Auswählen der den hohen Ortsfrequenzen zugeordneten Ortsfrequenzwerten nach deren Erzeugung oder unmittelbar durch die durchgeführte Transformation bzw. Filterung (entsprechend einem Hochpass) geschehen. Hingegen werden die den hohen Ortsfrequenzen entsprechenden Ortsfrequenzwerte bzw. transformierten Signalwerte für die weiteren Farbkanäle (also für die nicht dem einzigen Farbkanal der Ergänzungsbilddaten entsprechenden Farbkanäle) verworfen.

Die "hohen" Ortsfrequenzen und "niedrigen" Ortsfrequenzen sind im vorliegenden Zusammenhang als Relativangaben zu verstehen, d.h. die "hohen" Ortsfrequenzen sind höher als die "niedrigen" Ortsfrequenzen. Die Grenze zwischen den "hohen" Ortsfrequenzen und den "niedrigen" Ortsfrequenzen kann an den Anwendungsfall angepasst sein, insbesondere an die gewünschte zweite räumliche Auflösung. Beispielsweise muss in dem Fall, dass die erste räumliche Auflösung 8K beträgt und die zweite räumliche Auflösung 4K beträgt, die Grenze für die "niedrigen" Ortsfrequenzen niedriger gewählt werden als in dem Fall, dass die erste räumliche Auflösung 8K beträgt und die zweite räumliche Auflösung 6K beträgt.

Das genannte Transformieren der Signalwerte in Ortsfrequenzwerte kann beispielsweise durch eine diskrete Wavelet-Transformation erfolgen. Eine derartige diskrete Wavelet-Transformation entspricht einer Filterung nach räumlichen Frequenzen innerhalb des jeweiligen Farbkanals. Diese Filterung kann richtungsabhängig erfolgen (horizontal, vertikal). Als Ergebnis können Ortsfrequenzwerte erhalten werden, welche im Ortsraum lokalisiert sind und letztlich die Häufigkeit des Vorkommens unterschiedlicher Frequenzbereiche kennzeichnen.

Bei der diskreten Wavelet-Transformation können durch Anwenden einer räumlichen Tiefpass-filterung die hohen räumlichen Frequenzen abgeschwächt werden und durch Anwenden einer räumlichen Hochpassfilterung die niedrigen räumlichen Frequenzen abgeschwächt werden. Die durch die Tiefpassfilterung und die Hochpassfilterung jeweils ermittelten Bildinformationen (beispielsweise Ortsfrequenzwerte) können sich gegenseitig ergänzen. Da die Ausgangswerte der Transformation weiterhin im Ortsraum lokalisiert sein können, verringert sich durch die jeweilige Filterung die Auflösung, ohne dass jedoch insgesamt Bildinformation verlorengeht.

Als Ausgangswerte der diskreten Wavelet-Transformation können, wie bereits erwähnt, insbesondere Ortsfrequenzwerte erzeugt werden, die unterschiedlichen Ortsfrequenzen und unterschiedlichen Richtungen zugeordnet sind, nämlich:
LL-Ortsfrequenzwerte, die einer Tiefpassfilterung in horizontaler Richtung und einer Tiefpassfilterung in vertikaler Richtung entsprechen;
LH-Ortsfrequenzwerte, die einer Tiefpassfilterung in horizontaler Richtung und einer Hochpassfilterung in vertikaler Richtung entsprechen;
HL-Ortsfrequenzwerte, die einer Hochpassfilterung in horizontaler Richtung und einer Tiefpass-filterung in vertikaler Richtung entsprechen; und
HH-Ortsfrequenzwerte, die einer Hochpassfilterung in horizontaler Richtung und einer Hochpassfilterung in vertikaler Richtung entsprechen.

Die Verwendung einer diskreten Wavelet-Transformation hat im vorliegenden Zusammenhang somit den Vorteil, dass für jeden Farbkanal der Farbbilddaten die Bildinformation gemäß der zweiten räumlichen Auflösung vorliegt. Die den niedrigen Ortsfrequenzen entsprechenden Ortsfrequenzwerte (insbesondere die genannten LL-Ortsfrequenzwerte) sind weiterhin im Ortsraum lokalisiert, d.h. sie sind den zweiten Bildpunkten der Farbbilddaten zugeordnet, und sie lassen bei visueller Betrachtung die Bildinformation gemäß der zweiten räumlichen Auflösung erkennen. Die den niedrigen Ortsfrequenzen entsprechenden Ortsfrequenzwerte können daher bei der Aufzeichnung einer Bewegtbildsequenz ohne aufwendige Zusatzmaßnahmen in die üblichen Signalwiedergabe- und Signalverarbeitungspfade integriert werden, beispielsweise an einer Anzeigeeinrichtung wiedergegeben werden (insbesondere nach Durchführung einer Farbraumtransformation zur Anpassung an die Anzeigeeinrichtung) und/oder komprimiert werden (insbesondere auch mittels eines herkömmlichen RGB-Kompressionsverfahrens).

Der genannte Schritt des Interpolierens der Sensorbilddaten und der genannte Schritt des Transformierens der Signalwerte können zumindest für die nicht dem einzigen Farbkanal der Ergänzungsbilddaten entsprechenden Farbkanäle (insbesondere für den Rot- und den Blau-Farbkanal) auch innerhalb einer einzigen Rechenoperation durchgeführt werden. Hierdurch kann der Rechenaufwand vereinfacht und beschleunigt werden.

Die Sensorbilddaten können wie erläutert für einen der wenigstens drei Farbkanäle der Sensorbilddaten (insbesondere den Grün-Farbkanal) mehr Signalwerte umfassen als für jeden der weiteren der wenigstens drei Farbkanäle, wobei der genannte einzige Farbkanal der Ergänzungsbilddaten diesem einen der wenigstens drei Farbkanäle der Sensorbilddaten entsprechen kann.

Alternativ hierzu kann bei anderen Ausführungsformen der Schritt des Erzeugens der Farbbilddaten basierend auf den Sensorbilddaten die folgenden Verarbeitungsschritte umfassen:
- für nur einen ersten Farbkanal der wenigstens drei Farbkanäle der Sensorbilddaten, der dem genannten einzigen Farbkanal der Ergänzungsbilddaten entspricht, Interpolieren der Sensorbilddaten, um für diejenigen der ersten Bildpunkte, für die noch kein Signalwert gemäß dem ersten Farbkanal vorliegt, einen Signalwert gemäß dem ersten Farbkanal zu ermitteln;
- für den ersten Farbkanal der Sensorbilddaten Transformieren der Signalwerte einschließlich der interpolierten Signalwerte in Ortsfrequenzwerte, die niedrigen und hohen Ortsfrequenzen entsprechen;
- Ermitteln der Farbbilddaten für einen ersten Farbkanal der wenigstens drei Farbkanäle der Farbbilddaten, der dem ersten Farbkanal der Sensorbilddaten entspricht, durch Auswählen von niedrigen Ortsfrequenzen entsprechenden Ortsfrequenzwerten des ersten Farbkanals; und
- Ermitteln der Farbbilddaten für die weiteren der wenigstens drei Farbkanäle der Farbbilddaten durch Adaptieren der Signalwerte gemäß den weiteren der wenigstens drei Farbkanäle der Sensorbilddaten auf Bildpunktpositionen, die den Farbbilddaten des ersten Farbkanals entsprechen;
wobei der Schritt des Erzeugens der Ergänzungsbilddaten basierend auf den Sensorbilddaten den folgenden Verarbeitungsschritt umfasst:
- Ermitteln der Ergänzungsbilddaten für den einzigen Farbkanal der Ergänzungsbilddaten durch Auswählen von hohen Ortsfrequenzen entsprechenden Ortsfrequenzwerten.

Bei derartigen Ausführungsformen werden die Sensorbilddaten lediglich teilweise interpoliert, nämlich nur für denjenigen der wenigstens drei Farbkanäle der Sensorbilddaten, der dem genannten einzigen Farbkanal der Ergänzungsbilddaten entspricht (insbesondere den Grün-Farbkanal), so dass für jeden der ersten Bildpunkte gemäß der (höheren) ersten räumlichen Auflösung ein Signalwert gemäß dem ersten Farbkanal vorliegt. Dieses Interpolieren kann für den genannten ersten Farbkanal gemäß einem Verfahren erfolgen, das üblich ist, um Mosaikbilddaten in RGB-Bilddaten zu überführen. Das Interpolieren kann, wie bereits erwähnt, im vorliegenden Zusammenhang eine räumliche Filterung umfassen (innerhalb des jeweiligen Farbkanals oder unter zusätzlicher Berücksichtigung von Signalwerten auch anderer Farbkanäle). Die Signalwerte der Sensorbilddaten (originäre Signalwerte und interpolierte Signalwerte) des ersten Farbkanals der Sensorbilddaten werden durch Transformation in unterschiedliche Ortsfrequenzen (räumliche Frequenzen) zerlegt. Die transformierten Signalwerte bilden somit Ortsfrequenzwerte, die unterschiedliche Ortsfrequenzen der Bildinformation repräsentieren, nämlich niedrige und hohe Ortsfrequenzen, wie vorstehend erläutert. Die Transformation kann beispielsweise direkt oder indirekt durch eine räumliche Tiefpassfilterung und eine räumliche Hochpassfilterung, oder generell durch eine räumliche Bandpassfilterung durchgeführt werden. Aus der somit nach Ortsfrequenzen separierten Bildinformation des ersten Farbkanals werden niedrige Ortsfrequenzen ausgewählt, beispielsweise durch Auswählen der den niedrigen Ortsfrequenzen zugeordneten Ortsfrequenzwerte nach deren Erzeugung oder unmittelbar durch die durchgeführte Transformation bzw. Filterung (entsprechend einem Tiefpass). Hierdurch können für den ersten Farbkanal die Farbbilddaten der (geringeren) zweiten räumlichen Auflösung ermittelt werden.

Für die weiteren Farbkanäle der Farbbilddaten werden die Farbbilddaten durch Adaptieren der Signalwerte der Sensorbilddaten auf Bildpunktpositionen ermittelt, die den Farbbilddaten des ersten Farbkanals entsprechen. Für die Farbbilddaten gemäß der zweiten räumlichen Auflösung müssen die Signalwerte der verschiedenen Farbkanäle übereinstimmenden Bildpunktpositionen entsprechen, nämlich den Positionen der genannten zweiten Bildpunkte, die jedoch nicht unbedingt den Positionen der ersten Bildpunkte der Sensorbilddaten entsprechen. Das Adaptieren der Signalwerte der Sensorbilddaten berücksichtigt also, dass in Bezug auf die Sensorbilddaten gemäß der (höheren) ersten räumlichen Auflösung die Farbbilddaten eine (geringere) zweite räumliche Auflösung besitzen und somit die Positionen der zweiten Bildpunkte der Farbbilddaten generell nicht mit den Positionen der ersten Bildpunkte der Sensorbilddaten übereinstimmen. Das Adaptieren der Signalwerte der Sensorbilddaten kann somit ein Umrechnen auf versetzte Bildpunktpositionen und/oder ein Interpolieren umfassen. Ein Interpolieren zum Erzeugen von Signalwerten an zusätzlichen Bildpunktpositionen ist beispielsweise erforderlich, wenn die erste und die zweite räumliche Auflösung nicht in einem dyadischen Verhältnis zueinander stehen (z.B. 8K zu 6K oder 6K zu 4K).

Hingegen werden die Ergänzungsbilddaten durch Auswählen von hohen Ortsfrequenzen der transformierten Signalwerte lediglich für den einzigen Farbkanal der Ergänzungsbilddaten ausgewählt; dies kann wiederum durch Auswählen der den hohen Ortsfrequenzen zugeordneten Ortsfrequenzwerten nach deren Erzeugung oder unmittelbar durch die durchgeführte Transformation bzw. Filterung (entsprechend einem Hochpass) geschehen.

Die "hohen" Ortsfrequenzen und "niedrigen" Ortsfrequenzen sind im vorliegenden Zusammenhang als Relativangaben zu verstehen, d.h. die "hohen" Ortsfrequenzen sind höher als die "niedrigen" Ortsfrequenzen. Die Grenze zwischen den "hohen" Ortsfrequenzen und den "niedrigen" Ortsfrequenzen kann an den Anwendungsfall angepasst sein, wie vorstehend bereits erläutert.

Das genannte Transformieren der Signalwerte des ersten Farbkanals in Ortsfrequenzwerte kann beispielsweise durch eine diskrete Wavelet-Transformation erfolgen. Wie erläutert entspricht eine derartige diskrete Wavelet-Transformation einer Filterung nach räumlichen Frequenzen innerhalb des Farbkanals. Diese Filterung kann richtungsabhängig erfolgen (horizontal, vertikal). Als Ergebnis können Ortsfrequenzwerte erhalten werden, welche letztlich die Häufigkeit des Vorkommens unterschiedlicher Frequenzbereiche kennzeichnen. Die Verwendung einer diskreten Wavelet-Transformation hat im vorliegenden Zusammenhang den Vorteil, dass die Bildinformation gemäß der zweiten räumlichen Auflösung vorliegt. Die den niedrigen Ortsfrequenzen entsprechenden Ortsfrequenzwerte sind weiterhin im Ortsraum lokalisiert, d.h. sie sind den zweiten Bildpunkten der Farbbilddaten zugeordnet, und sie lassen bei visueller Betrachtung für den ersten Farbkanal der Sensorbilddaten die Bildinformation gemäß der zweiten räumlichen Auflösung erkennen. Die den niedrigen Ortsfrequenzen entsprechenden Ortsfrequenzwerte können daher bei der Aufzeichnung einer Bewegtbildsequenz ohne aufwendige Zusatzmaßnahmen in die üblichen Signalwiedergabe- und Signalverarbeitungspfade integriert werden.

Das genannte Adaptieren der Signalwerte des jeweiligen weiteren Farbkanals der Sensorbilddaten auf die Bildpunktpositionen, die den Farbbilddaten des ersten Farbkanals entsprechen, kann wie bereits erwähnt ein Umrechnen auf versetzte Bildpunktpositionen umfassen (horizontal und/oder vertikal versetzte Bildpunktpositionen). Dies kann beispielsweise durch eine räumliche Filterung erfolgen, die Signalwerte des jeweiligen weiteren Farbkanals der Sensorbilddaten an benachbarten Bildpunktpositionen und Signalwerte des ersten Farbkanals der Sensorbilddaten an benachbarten Bildpunktpositionen berücksichtigt (originäre Signalwerte oder originäre und interpolierte Signalwerte des ersten Farbkanals). Als benachbarte Bildpunktpositionen sind im vorliegenden Zusammenhang unmittelbar benachbarte und mittelbar benachbarte Bildpunktpositionen in der Umgebung des jeweils betrachteten Bildpunkts zu verstehen, also beispielsweise auch übernächste Nachbarn. Somit werden für die räumliche Filterung nicht nur Signalwerte des jeweiligen weiteren Farbkanals der Sensorbilddaten an benachbarten Bildpunktpositionen berücksichtigt (beispielsweise durch eine gewichtete Interpolation), sondern auch Signalwerte des ersten Farbkanals der Sensorbilddaten (insbesondere des Grün-Farbkanals) an benachbarten Bildpunktpositionen. Letzteres kann beispielsweise durch Bildung eines Gradienten - insbesondere eines Signalwert-Gradienten - erfolgen, welcher der Gewichtung der genannten Interpolation zugrunde gelegt wird. Sofern ein Gradient von Signalwerten des ersten Farbkanals der Sensorbilddaten gebildet wird, geschieht dies vorzugsweise nach dem genannten Interpolieren der Sensorbilddaten des ersten Farbkanals. Das genannte Adaptieren der Signalwerte des jeweiligen weiteren Farbkanals der Sensorbilddaten auf die Bildpunktpositionen des ersten Farbkanals kann wie bereits erwähnt auch ein Interpolieren auf zusätzliche Bildpunktpositionen umfassen. Dieses Interpolieren kann wie das Interpolieren der Sensorbilddaten des ersten Farbkanals gemäß einem üblichen Verfahren geschehen und kann insbesondere durch eine räumliche Filterung umfassen wie für das Umrechnen auf versetzte Bildpunktpositionen erläutert.

Der genannte Schritt des Interpolierens der Sensorbilddaten des ersten Farbkanals und der genannte Schritt des Transformierens der Signalwerte des ersten Farbkanals können auch innerhalb einer einzigen Rechenoperation durchgeführt werden. Hierdurch kann der Rechenaufwand vereinfacht und beschleunigt werden.

Bei den vorstehend erläuterten Ausführungsformen werden für den Schritt des Erzeugens der Farbbilddaten Signalwerte der Sensorbilddaten einschließlich interpolierter Signalwerte in Ortsfrequenzwerte transformiert, und sodann werden Farbbilddaten durch Auswählen von niedrigen Ortsfrequenzen entsprechenden Ortsfrequenzwerten ermittelt. Somit enthalten die erzeugten Farbbilddaten auch eine Information über Signalwerte von ersten Bildpunkten der Sensorbilddaten des jeweiligen Farbkanals in der Umgebung eines betrachteten Bildpunkts, wie vorstehend erwähnt.

Die Sensorbilddaten können wie erläutert für einen der wenigstens drei Farbkanäle der Sensorbilddaten (insbesondere den Grün-Farbkanal) mehr Signalwerte umfassen als für jeden der weiteren der wenigstens drei Farbkanäle, wobei der genannte erste Farbkanal der Sensorbilddaten und der genannte einzige Farbkanal der Ergänzungsbilddaten diesem einen der wenigstens drei Farbkanäle der Sensorbilddaten entsprechen kann.

Bei manchen Ausführungsformen kann vor dem Schritt des Erzeugens von Farbbilddaten wenigstens einer der folgenden Schritte durchgeführt werden:
- Korrigieren einzelner Sensorbilddaten, die defekten oder stark abweichenden Sensorelementen des Bildsensors entsprechen;
- Durchführen einer nicht-linearen Transformation der Sensorbilddaten innerhalb eines jeden der wenigstens drei Farbkanäle der Sensorbilddaten; oder
- Durchführen eines Weißabgleichs zwischen den wenigstens drei Farbkanälen der Sensorbilddaten.

Beispielsweise können die Sensorbilddaten für Bildpunkte, die bekannten defekten Sensorelementen des Bildsensors oder stark abweichenden Sensorelementen entsprechen, durch vorbestimmte Werte oder durch interpolierte Werte ersetzt werden, insbesondere gemäß einer Filterung der Signalwerte von benachbarten Bildpunkten innerhalb des jeweiligen Farbkanals. Als stark abweichende Sensorelemente sind im vorliegenden Zusammenhang Sensorelemente zu verstehen, deren Signalwerte von den Signalwerten benachbarter Sensorelemente (insbesondere des jeweiligen Farbkanals) besonders stark abweichen, insbesondere um einen vorbestimmten Schwellenwert (beispielsweise absoluter oder prozentualer Schwellenwert). Derartige starke Abweichungen können auch zwangsläufig auftreten und insofern als vorbestimmte Abweichungen berücksichtigt werden. Beispielsweise können derartige starke Abweichungen im Falle von Phasendetektion-Autofokus-Sensorelementen (PDAF) auftreten und berücksichtigt werden.

Durch eine nicht-lineare Transformation der Sensorbilddaten innerhalb eines jeden der wenigstens drei Farbkanäle der Sensorbilddaten kann beispielsweise eine Helligkeitsverteilung der Signalwerte modifiziert werden, um nachfolgende Signalverarbeitungsschritte (insbesondere eine Kompression der Farbbilddaten) zu vereinfachen oder deren Effizienz zu erhöhen. Die nicht-lineare Transformation kann auch eine Quantisierung der Sensorbilddaten umfassen, durch welche die Bit-Tiefe der Signalwerte verringert wird. Beispielsweise können höhere Signalwerte stärker quantisiert werden als (relativ) niedrigere Signalwerte.

Ein Weißabgleich kann beispielsweise dadurch durchgeführt werden, dass die Signalwerte eines jeden Farbkanals der Sensorbilddaten mit einem Skalierungsfaktor multipliziert werden, wobei der jeweilige Skalierungsfaktor für jeden Farbkanal einheitlich gewählt wird und für die verschiedenen Farbkanäle jedoch unterschiedliche Skalierungsfaktoren gewählt werden.

Bei manchen Ausführungsformen können die erzeugten Farbbilddaten vor dem Speichern gemäß einem ersten Kompressionsverfahren komprimiert werden, wobei die Ergänzungsbilddaten vor dem Speichern gemäß einem zweiten, von dem ersten Kompressionsverfahren verschiedenen Kompressionsverfahren komprimiert werden. Durch die Aufteilung in Farbbilddaten mit wenigstens drei Farbkanälen und in Ergänzungsbilddaten mit lediglich einem einzigen Farbkanal können verschiedene, für die jeweiligen Bilddaten optimierte Kompressionsverfahren angewendet werden. Die jeweilige Kompression kann unterschiedlich stark erfolgen. Beispielsweise können die Farbbilddaten gemäß einem Kompressionsverfahren komprimiert werden, welches auf einer diskreten Wavelet-Transformation (beispielsweise JPEG XS) oder auf einer diskreten Kosinustransformation (beispielsweise Apple "ProRes", eingetragene Marke) basiert. Die Ergänzungsbilddaten hingegen können gemäß einem hinsichtlich des Rechenaufwands einfacheren Kompressionsverfahren komprimiert werden. Beispielsweise können die Ergänzungsbilddaten quantisiert werden, wobei zuvor optional eine (weitere) nicht-lineare Transformation der Signalwerte durchgeführt werden kann und wobei nach der Quantisierung eine Entropiekodierung durchgeführt werden kann. Die jeweiligen Kompressionsverfahren können unabhängig voneinander durchgeführt werden und müssen nicht gleichzeitig durchgeführt werden. Die jeweiligen Kompressionsverfahren können verlustbehaftete oder verlustfreie Kompressionsverfahren sein.

Die für die Farbbilddaten und die Ergänzungsbilddaten vorgesehenen Kompressionsverfahren können sich auch darin unterscheiden, dass das eine aus erstem und zweitem Kompressionsverfahren ein temporales Kompressionsverfahren ist, wohingegen das andere aus erstem und zweitem Kompressionsverfahren ein nicht-temporales Kompressionsverfahren ist. Ein temporales Kompressionsverfahren ist ein Kompressionsverfahren, bei dem für das Komprimieren der Bilddaten eines Einzelbilds einer Bewegtbildsequenz auch Information eines vorangegangenen Einzelbilds und/oder eines nachfolgenden Einzelbilds der Bewegtbildsequenz verwertet wird (auch als "inter-frame" Kompression bezeichnet). Ein nicht-temporales Kompressionsverfahren ist ein Kompressionsverfahren, bei dem das Komprimieren der Bilddaten eines Einzelbilds einer Bewegtbildsequenz lediglich auf Information dieses Einzelbilds, nicht jedoch auf Information eines vorangegangenen Einzelbilds und/oder eines nachfolgenden Einzelbilds der Bewegtbildsequenz beruht (auch als "intra-frame" Kompression bezeichnet).

Bei manchen Ausführungsformen können die Farbbilddaten vor dem Speichern gemäß einem ersten temporalen Kompressionsverfahren komprimiert werden, wobei die Ergänzungsbilddaten vor dem Speichern gemäß einem zweiten nicht-temporalen Kompressionsverfahren komprimiert werden. Hierbei kann ausgenutzt werden, dass ein temporales Kompressionsverfahren die Kompressionseffizienz verbessern kann und sich für die Farbbilddaten mit den darin enthaltenen relativ niedrigen Ortsfrequenzen jedoch besser eignet als für die Ergänzungsbilddaten mit den darin enthaltenen relativ hohen Ortsfrequenzen. Bei den Farbbilddaten ist die Korrelation zwischen aufeinanderfolgenden Einzelbildern einer Bewegtbildsequenz besonders hoch, so dass durch ein temporales Kompressionsverfahren eine hohe Kompressionseffizienz erreicht werden kann, ohne die wahrnehmbare Bildqualität signifikant einzuschränken.

Bei anderen Ausführungsformen können die Farbbilddaten vor dem Speichern gemäß einem ersten nicht-temporalen Kompressionsverfahren komprimiert werden, wobei die Ergänzungsbilddaten vor dem Speichern gemäß einem zweiten temporalen Kompressionsverfahren komprimiert werden. Derartige Ausführungsformen eignen sich beispielsweise, wenn die Postproduktion (z.B. Rohschnitt) auch anhand der komprimierten Farbbilddaten durchgeführt werden soll. Der Zugriff auf die Farbbilddaten von Einzelbildern der komprimierten Bewegtbildsequenz ist einfacher, wenn hierfür nicht ein Verrechnen mit Informationen aus vorangegangenen oder nachfolgenden Einzelbildern erforderlich ist. Die lediglich für ein späteres Aufbereiten der (z.B. geschnittenen) Farbbilddaten verwendeten Ergänzungsbilddaten können hingegen mit einem temporalen Kompressionsverfahren hoher Effizienz komprimiert sein.

Bei manchen Ausführungsformen kann das Verfahren eine zumindest zweistufige Rauschreduzierung (engl.: Denoising) umfassen, wobei vor den Schritten des Erzeugens von Farbbilddaten und des Erzeugens von Ergänzungsbilddaten eine erste Rauschreduzierung an den Sensorbilddaten durchgeführt wird, und wobei nach den Schritten des Erzeugens von Farbbilddaten und des Erzeugens von Ergänzungsbilddaten und vor dem Schritt des Speicherns der Farbbilddaten und der Ergänzungsbilddaten eine zweite Rauschreduzierung an den Farbbilddaten und an den Ergänzungsbilddaten durchgeführt wird.

Die erste Rauschreduzierung kann im Rahmen eines Vorverarbeitungsschritts durchgeführt werden, der beispielsweise auch die genannte Korrektur einzelner Sensorbilddaten umfasst. Die erste Rauschreduzierung kann beispielsweise durch eine Filterung basierend auf den Signalwerten von Bildpunkten in der Umgebung des betrachteten Bildpunkts durchgeführt werden. Diese Filterung kann generell auf Signalwerten lediglich des jeweiligen Farbkanals basieren, wobei zusätzlich jedoch eine Information über in dem Bildinhalt enthaltene Strukturen berücksichtigt werden kann, die auch aus den weiteren Farbkanälen der Sensorbilddaten ermittelt wird (beispielsweise eine Information über das Vorhandensein und eine Bewegung von Objekten, die durch Vergleichen von aufeinander folgenden Einzelbildern einer Bewegtbildsequenz ermittelt wird).

Die zweite Rauschreduzierung wird nach der Unterteilung der Sensorbilddaten in die Farbbilddaten und die Ergänzungsbilddaten durchgeführt und kann sich somit deren Eigenheiten zunutze machen, insbesondere deren unterschiedliche räumliche Auflösung. Die zweite Rauschreduzierung kann nach den genannten Schritten des Interpolierens der Sensorbilddaten und des Transformierens in Ortsfrequenzwerte (für sämtliche Farbkanäle oder nur den ersten Farbkanal) durchgeführt werden. Die zweite Rauschreduzierung kann - zumindest teilweise - vor oder während des genannten Komprimierens der Farbbilddaten und der Ergänzungsbilddaten durchgeführt werden. Die zweite Rauschreduzierung kann hinsichtlich der Farbbilddaten und der Ergänzungsbilddaten unterschiedlich durchgeführt werden. Die zweite Rauschreduzierung kann hinsichtlich der Farbbilddaten für Ortsfrequenzwerte, die hohen Ortsfrequenzen entsprechen, auf andere Weise und insbesondere stärker durchgeführt werden als für Ortsfrequenzwerte, die niedrigen Ortsfrequenzen entsprechen. Eine selektiv unterschiedliche Rauschreduzierung für niedrige und hohe Ortsfrequenzen der Farbbilddaten kann insbesondere auf den Ortsfrequenzwerten basieren, die durch das genannte Interpolieren und nachfolgende Transformieren der Sensorbilddaten ermittelt worden sind, wodurch bereits eine nach Ortsfrequenzen separierte Bildinformation vorliegt. Eine selektiv unterschiedliche Rauschreduzierung für niedrige und hohe Ortsfrequenzen der Farbbilddaten kann jedoch auch zumindest teilweise auf Ortsfrequenzinformationen beruhen, die infolge des Komprimierens der Farbbilddaten und/oder der Ergänzungsbilddaten zur Verfügung stehen. Wie erläutert können die Farbbilddaten beispielsweise gemäß einem Kompressionsverfahren komprimiert werden, welches auf einer diskreten Wavelet-Transformation oder auf einer diskreten Kosinustransformation basiert; in derartigen Fällen wird ohnehin eine Information über unterschiedliche Ortsfrequenzen erhalten (z.B. in Form von Koeffizienten des jeweiligen Kompressionsverfahrens), die für eine frequenzselektive Rauschreduzierung genutzt werden können, so dass die zweite Rauschreduzierung zumindest teilweise in den genannten Schritt des Komprimierens der Farbbilddaten und/oder der Ergänzungsbilddaten integriert werden kann.

Die zweite Rauschreduzierung der Ergänzungsbilddaten kann allein auf den Signalwerten der Ergänzungsbilddaten beruhen (beispielsweise durch eine lokale Tiefpass-Filterung der Ergänzungsbilddaten), wobei bei manchen Ausführungsformen zusätzlich Informationen aus den Farbbilddaten berücksichtigt werden können (beispielsweise um einen Filter-Kernel zu definieren oder anzupassen).

Durch die zweistufige Rauschreduzierung kann ein in den Sensorbilddaten vorhandenes Bildrauschen besonders wirkungsvoll und schonend verringert werden, ohne die Qualität der Farbbilddaten signifikant einzuschränken und ohne die Fähigkeit der Ergänzungsbilddaten, die Qualität der Farbbilddaten nachträglich noch zu erhöhen, signifikant einzuschränken.

Bei manchen Ausführungsformen kann bei der zweiten Rauschreduzierung für die an den Farbbilddaten und/oder den Ergänzungsbilddaten bezüglich hoher Ortsfrequenzen durchgeführte Rauschreduzierung eine in niedrigen Ortsfrequenzen enthaltene Information über vorhandene Strukturen des jeweiligen Bildinhalts berücksichtigt werden. Beispielsweise kann eine Kante in Ortsfrequenzwerten, die niedrigen Ortsfrequenzen entsprechen, erkennbar sein, wobei eine solche Information dazu verwendet wird, die betreffende Kantenstruktur in Ortsfrequenzwerten, die hohen Ortsfrequenzen entsprechen, weitgehend zu erhalten und nicht etwa durch eine Filterung oder eine zu starke Filterung wahrnehmbar zu glätten. Die Berücksichtigung derartiger Informationen kann auch temporal erfolgen (wie nachfolgend erläutert) und/oder übergreifend zwischen den Farbbilddaten und den Ergänzungsbilddaten, d.h. eine anhand der Farbbilddaten erkannte Struktur kann auch für eine Rauschreduzierung der Ergänzungsbilddaten berücksichtigt werden. Die Berücksichtigung einer in niedrigen Ortsfrequenzen enthaltenen Information über vorhandene Strukturen des jeweiligen Bildinhalts kann beispielsweise durch eine entsprechende Festlegung oder Anpassung eines Filter-Kernels erfolgen, der für die an den Farbbilddaten und/oder den Ergänzungsbilddaten bezüglich hoher Ortsfrequenzen durchgeführte Rauschreduzierung verwendet wird.

Aufgrund der Zerlegung der Sensorbilddaten in die Farbbilddaten und die Ergänzungsbilddaten ist es bei manchen Ausführungsformen alternativ auch möglich, die zweite Rauschreduzierung lediglich an den (hochfrequenten) Ergänzungsbilddaten durchzuführen, ohne die Farbbilddaten entsprechend zu modifizieren, wobei die Farbbilddaten jedoch der zweiten Rauschreduzierung der Ergänzungsbilddaten zugrunde gelegt werden können.

Die genannten Maßnahmen zur Rauschreduzierung können im Falle einer Bewegtbildsequenz auch temporal durchgeführt werden, d.h. die an den Bilddaten eines Einzelbilds durchgeführte Rauschreduzierung kann zumindest teilweise auch auf Sensorbilddaten oder Signalwerten oder Ortsfrequenzwerten eines vorangegangenen Einzelbilds und/oder eines nachfolgenden Einzelbilds der Bewegtbildsequenz basieren.

Bei manchen Ausführungsformen können die Farbbilddaten und die Ergänzungsbilddaten in unterschiedlichen Datenspeichern gespeichert werden. Wie bereits erläutert können als Datenspeicher beispielsweise ein Datenspeicher der Kamera (beispielsweise Festkörperspeicher, fest verbaut oder Wechselspeichermedium), oder ein mit der Kamera lokal leitungsgebunden gekoppelter Datenspeicher (beispielsweise Rekorder), oder ein mit der Kamera lokal drahtlos gekoppelter Datenspeicher (beispielsweise Edge-Server) vorgesehen sein.

Beispielsweise kann eine für eine Filmproduktion vorteilhafte Aufteilung derart vorgesehen sein, dass die Sensorbilddaten an einem Filmset von einem Bildsensor einer Kamera erzeugt werden, wobei sowohl die Farbbilddaten als auch die Ergänzungsbilddaten in einem Datenspeicher der Kamera oder in einem über eine lokale Datenverbindung mit der Kamera verbundenen Datenspeicher gespeichert werden, und wobei lediglich die Farbbilddaten - nicht jedoch die Ergänzungsbilddaten - zusätzlich über ein Weitverkehrsnetzwerk (wide area network, WAN) oder das Internet in einem Cloud-Speicher gespeichert werden. Bei einer solchen Ausführungsform können anhand der in dem Cloud-Speicher gespeicherten Farbbilddaten ohne Zeitverlust bereits erste Schritte einer Postproduktion durchgeführt werden (beispielsweise Rohschnitt), ohne dass die Farbbilddaten auf einem physischen Speichermedium zu einer entsprechenden Datenverarbeitungseinrichtung gebracht werden müssen und ohne dass die Bandbreite für die Fernübertragung auch der Ergänzungsbilddaten benötigt wird. Dennoch sind die relevanten Bilddatensätze (Farbbilddaten und Ergänzungsbilddaten) am Filmset vollständig vorhanden und können dort beispielsweise gesichert werden.

Bei einer alternativen Ausführungsform können die Sensorbilddaten von einem Bildsensor einer Kamera erzeugt werden, wobei die in der Kamera erzeugten Farbbilddaten lediglich über ein Weitverkehrsnetzwerk oder das Internet in einem Cloud-Speicher gespeichert werden, und wobei die in der Kamera erzeugten Ergänzungsbilddaten lediglich in einem Datenspeicher der Kamera oder in einem über eine lokale Datenverbindung mit der Kamera verbundenen Datenspeicher (beispielsweise Rekorder, Edge-Sever) gespeichert werden und somit für eine spätere Aufbereitung der Farbbilddaten zur Verfügung stehen. Für die Übertragung der Farbbilddaten an den Cloud Speicher wird (im Vergleich zu den vollständigen Bilddatensätzen, also den Farbbilddaten und den Ergänzungsbilddaten) eine relativ geringe Bandbreite benötigt. In dem Datenspeicher der Kamera oder in dem mit der Kamera verbundenen Datenspeicher wird Speicherkapazität lediglich für die Ergänzungsbilddaten benötigt, jedoch keine Speicherkapazität für ein dauerhaftes Speichern der gesamten Farbbilddaten.

Gemäß einer weiteren Ausführungsform können die Sensorbilddaten von einem Bildsensor einer Kamera erzeugt werden, wobei die Farbbilddaten und die Ergänzungsbilddaten über ein Weitverkehrsnetzwerk oder das Internet in einem Cloud-Speicher gespeichert werden, und wobei lediglich die Farbbilddaten - nicht jedoch die Ergänzungsbilddaten - zusätzlich in einem Datenspeicher der Kamera oder in einem über eine lokale Datenverbindung mit der Kamera verbundenen Datenspeicher gespeichert werden. Bei einer solchen Ausführungsform können die vollständigen Bilddatensätze, also die Farbbilddaten und die Ergänzungsbilddaten, ohne relevante Verzögerung in einem Cloud-Speicher zur Verfügung gestellt werden, um anhand dieser Bilddatensätze die erwünschten Schritte der Postproduktion durchführen zu können. In dem Datenspeicher der Kamera oder in dem mit der Kamera verbundenen Datenspeicher brauchen hingegen lediglich die Farbbilddaten gespeichert zu werden, die für eine Kontrolle der Aufzeichnung einer Bewegtbildsequenz am Filmset bereits ausreichend sind und am Filmset erste Schritte einer Postproduktion ermöglichen.

Gemäß einer weiteren Ausführungsform können die Sensorbilddaten von einem Bildsensor einer Kamera erzeugt werden, wobei lediglich die Farbbilddaten - nicht jedoch die Ergänzungsbilddaten - in einem Datenspeicher der Kamera oder in einem über eine lokale Datenverbindung mit der Kamera verbundenen Datenspeicher gespeichert werden, und wobei lediglich die Ergänzungsbilddaten - nicht jedoch die Farbbilddaten - über ein Weitverkehrsnetzwerk oder das Internet in einem Cloud-Speicher gespeichert werden. Bei einer solchen Ausführungsform können am Filmset bereits erste Schritte einer Postproduktion durchgeführt werden, und die gespeicherten Farbbilddaten können in manchen Fällen hinsichtlich ihrer Auflösung und Qualität bereits für eine vollständige Postproduktion ausreichen. Hingegen kann der Zugriff auf die in dem Cloud-Speicher gespeicherten Ergänzungsbilddaten einem besonderen Personenkreis vorbehalten bleiben, um bei Bedarf die Farbbilddaten anhand der Ergänzungsbilddaten aufbereiten zu können. Hierfür können insbesondere entsprechende Berechtigungsstufen vergeben werden, wie nachfolgend noch erläutert wird.

Als Cloud-Speicher ist im vorliegenden Zusammenhang ein Speicher (beispielsweise ein Festkörper-, magnetischer, optischer oder sonstiger Speicher eines Cloud-Servers oder einer Workstation) zu verstehen, auf den eine Kamera, welche die Sensorbilddaten erzeugt, direkt oder indirket (beispielsweise über einen lokalen Edge-Server) über ein Weitverkehrsnetzwerk oder das Internet zugreifen kann (und mangels direkter Kabelverbindung oder Funkverbindung zu dem Speicher zugreifen muss).

Bei manchen Ausführungsformen können die Farbbilddaten und die Ergänzungsbilddaten Metadaten umfassen, die ein gegenseitiges Zuordnen von Bilddatensätzen der Farbbilddaten und Bilddatensätzen der Ergänzungsbilddaten ermöglichen, die einem einzigen Bilddatensatz der Sensorbilddaten entsprechen. Beispielsweise können die Metadaten einen Zeitstempel umfassen. Hierdurch wird ein späteres Aufbereiten der Farbbilddaten anhand der Ergänzungsbilddaten vereinfacht, selbst wenn die Farbbilddaten und die Ergänzungsbilddaten zunächst in unterschiedlichen Datenspeichern gespeichert werden.

Bei manchen Ausführungsformen können die Farbbilddaten und die Ergänzungsbilddaten in verschlüsselter Form gespeichert werden, wobei die Farbbilddaten mit einem ersten Schlüssel verschlüsselt sind und die Ergänzungsbilddaten mit einem von dem ersten Schlüssel verschiedenen zweiten Schlüssel verschlüsselt sind. Hierdurch können unterschiedliche Berechtigungsstufen vergeben werden. Dies ist bei Filmproduktionen nicht nur vorteilhaft, um die Bilddaten vor einem unberechtigten Zugriff zu schützen, sondern beispielsweise auch um einem ersten Personenkreis ein Bearbeiten der Farbbilddaten gemäß der zweiten räumlichen Auflösung zu ermöglichen und jedoch nur einem eingeschränkten zweiten Personenkreis ein Aufbereiten der Farbbilddaten mithilfe Ergänzungsbilddaten gemäß der (höheren) dritten räumlichen Auflösung zu gestatten.

Bei manchen Ausführungsformen können lediglich die in einem Cloud-Speicher gespeicherten Farbbilddaten und/oder Ergänzungsbilddaten in verschlüsselter Form gespeichert werden. Insbesondere kann vorgesehen sein, dass lediglich die Ergänzungsbilddaten in einem Cloud-Speicher gespeichert werden, und zwar nur in dem Cloud-Speicher, wobei der Zugriff auf die Ergänzungsbilddaten eingeschränkt sein soll, wie vorstehend erläutert.

Wie bereits erwähnt, ermöglichen die Ergänzungsbilddaten in Kombination mit den Farbbilddaten ein nachträgliches Aufbereiten der Farbbilddaten (sogenanntes Rekonstruieren).

Bei manchen Ausführungsformen können die Farbbilddaten unter Verwendung der Ergänzungsbilddaten in erweiterte Farbbilddaten umgewandelt werden, die einer vierten räumlichen Auflösung entsprechen und wenigstens drei Farbkanäle umfassen, wobei die vierte räumliche Auflösung einer Anzahl von vierten Bildpunkten entspricht und die erweiterten Farbbilddaten für jeden der vierten Bildpunkte wenigstens drei Signalwerte gemäß den wenigstens drei Farbkanälen der erweiterten Farbbilddaten umfassen, wobei die vierte räumliche Auflösung der erweiterten Farbbilddaten höher ist als die zweite räumliche Auflösung der Farbbilddaten. Die Ergänzungsbilddaten können also dazu benutzt werden, um nachträglich die räumliche Auflösung der Farbbilddaten zu erhöhen. Dies funktioniert besonders gut, wenn die Ergänzungsbilddaten Informationen über hohe räumliche Frequenzen der Sensorbilddaten enthalten und wenn die Ergänzungsbilddaten Helligkeitsinformationen enthalten, die für sämtliche Farbkanäle zumindest ähnlich sind. Somit ermöglichen die Ergänzungsbilddaten ein teilweises oder im Wesentlichen vollständiges Rekonstruieren der räumlichen Auflösung der Sensorbilddaten. Die genannte vierte räumliche Auflösung der erweiterten Farbbilddaten kann insbesondere der ersten räumlichen Auflösung der Sensorbilddaten und/oder der dritten räumlichen Auflösung der Ergänzungsbilddaten entsprechen; dies ist jedoch nicht zwingend erforderlich. Die erweiterten Farbbilddaten können insbesondere RGB-Bilddaten sein. Ein derartiges Aufbereiten der Farbbilddaten kann unabhängig davon erfolgen, ob die Farbbilddaten und/oder Ergänzungsbilddaten zwischenzeitlich komprimiert und wieder dekomprimiert worden sind.

Bei manchen Ausführungsformen kann ein solches Umwandeln der Farbbilddaten in erweiterte Farbbilddaten insbesondere die folgenden Schritte umfassen:
- Ermitteln weiterer Signalwerte eines ersten Farbkanals der wenigstens drei Farbkanäle der Farbbilddaten, welcher dem genannten einzigen Farbkanal der Ergänzungsbilddaten entspricht (insbesondere dem bereits genannten ersten Farbkanal der Farbbilddaten), so dass für jeden der vierten Bildpunkte ein Signalwert gemäß dem ersten Farbkanal der Farbbilddaten vorliegt, wobei diese weiteren Signalwerte aus den Ergänzungsbilddaten und aus Signalwerten des ersten Farbkanals der Farbbilddaten durch ein Transformieren von Ortsfrequenzwerten in weitere Signalwerte oder durch ein Verwenden der Ergänzungsbilddaten als weitere Signalwerte ermittelt werden;
- Ermitteln weiterer Signalwerte der weiteren Farbkanäle der wenigstens drei Farbkanäle der Farbbilddaten, so dass für jeden der vierten Bildpunkte Signalwerte gemäß den weiteren Farbkanälen der Farbbilddaten vorliegen, wobei diese weiteren Signalwerte aus den Ergänzungsbilddaten und aus Signalwerten der weiteren Farbkanäle der Farbbilddaten durch ein Transformieren von Ortsfrequenzwerten in weitere Signalwerte oder durch ein Interpolieren von Signalwerten der weiteren Farbkanäle der Farbbilddaten ermittelt werden, wobei das Interpolieren insbesondere einen aus den Ergänzungsbilddaten abgeleiteten Gradienten berücksichtigen kann.

Bei dem Ermitteln weiterer Signalwerte des ersten Farbkanals der wenigstens drei Farbkanäle der Farbbilddaten kann das genannte Transformieren von Ortsfrequenzwerten in weitere Signalwerte insbesondere ein Transformieren der bereits genannten Ortsfrequenzwerte des einzigen Farbkanals der Ergänzungsbilddaten, die niedrigen und hohen Ortsfrequenzen entsprechen, umfassen. Bei dem Ermitteln weiterer Signalwerte der weiteren Farbkanäle der wenigstens drei Farbkanäle der Farbbilddaten kann das genannte Transformieren von Ortsfrequenzwerten in weitere Signalwerte insbesondere ein Transformieren der bereits genannten Ortsfrequenzwerte des einzigen Farbkanals der Ergänzungsbilddaten, die niedrigen und hohen Ortsfrequenzen entsprechen, sowie der bereits genannten Ortsfrequenzwerte des jeweiligen Farbkanals der Farbbilddaten, die niedrigen Ortsfrequenzen entsprechen, umfassen, d.h. diese Informationen werden in Kombination berücksichtigt. Die Ortsfrequenzwerte des einzigen Farbkanals der Ergänzungsbilddaten müssen hierbei nicht direkt berücksichtigt bzw. transformiert werden, sondern in die genannte Transformation können stattdessen auch die weiteren Signalwerte eingehen, die durch ein vorangegangenes Transformieren der Ortsfrequenzwerte des einzigen Farbkanals der Ergänzungsbilddaten ermittelt worden sind.

Bei dem Ermitteln weiterer Signalwerte des ersten Farbkanals der wenigstens drei Farbkanäle der Farbbilddaten kann das genannte Transformieren von Ortsfrequenzwerten in weitere Signalwerte insbesondere durch eine inverse Transformation erfolgen, welche einer umgekehrten Rechenvorschrift zu dem vorstehend erläuterten Transformieren der jeweiligen Signalwerte der Sensorbilddaten in Ortsfrequenzwerte (etwa durch eine diskrete Wavelet-Transformation) entspricht. Hierfür kann beispielsweise ein Rekonstruktions-Kernel verwendet werden, der dem Inversen des für eine vorangegangene diskrete Wavelet-Transformation verwendeten Kernel entspricht.

Entsprechendes gilt für das genannte Transformieren von Ortsfrequenzwerten in weitere Signalwerte bei dem Ermitteln weiterer Signalwerte der weiteren Farbkanäle der wenigstens drei Farbkanäle der Farbbilddaten, wobei diesem Transformieren ebenfalls die Ergänzungsbilddaten in Kombination mit Signalwerten des jeweiligen weiteren Farbkanals der Farbbilddaten zugrunde gelegt werden, obwohl die Ergänzungsbilddaten nicht diesem weiteren Farbkanal der Farbbilddaten entsprechen. Dennoch eignet sich eine solche Kombination, da die Ergänzungsbilddaten im Wesentlichen lediglich die (räumlich) hochfrequenten Anteile liefern. Sofern im weitesten Sinne eine Umkehrung einer zuvor erfolgten diskreten Wavelet-Transformation durchgeführt werden soll, können als Eingangswerte die LH-, HL- und HH-Informationen (insbesondere die genannten LH-, HL- und HH-Ortsfrequenzwerte) des einzigen Farbkanals der Ergänzungsbilddaten (z.B. Grün-Farbkanal) sowie die LL-Informationen (insbesondere die genannten LL-Ortsfrequenzwerte) des jeweiligen weiteren Farbkanals der Farbbilddaten (z.B. Rot- oder Blau-Farbkanal) verwendet werden. Hierfür kann beispielsweise ein Rekonstruktions-Kernel verwendet werden, der dem Inversen des für eine vorangegangene diskrete Wavelet-Transformation verwendeten Kernel entspricht, oder es können unterschiedliche, auf den jeweiligen Farbkanal optimierte Rekonstruktions-Kernel verwendet werden. Die Rekonstruktions-Kernel können einer jeweiligen Filterung entsprechen, welche die genannten Ortsfrequenzwerte als Eingangswerte verwendet.

Das genannte Ermitteln weiterer Signalwerte der erweiterten Farbbilddaten schließt nicht aus, dass die bereits vorhandenen Signalwerte der Farbbilddaten auch modifiziert werden.

Sofern im weitesten Sinne eine Umkehrung einer zuvor erfolgten diskreten Wavelet-Transformation durchgeführt werden soll, können manchen Ausführungsformen die genannten LL-Ortsfrequenzwerte im Wesentlichen unmittelbar als Signalwerte der erweiterten Farbbilddaten verwendet werden. Bei anderen Ausführungsformen (insbesondere bei nicht-dyadischen Verhältnissen zwischen der vierten räumlichen Auflösung und der zweiten räumlichen Auflösung) werden hingegen nicht nur weitere Signalwerte der wenigstens drei Farbkanäle ermittelt, sondern die vorhandenen Signalwerte der wenigstens drei Farbkanäle der Farbbilddaten werden auch modifiziert, insbesondere auf geänderte Bildpunktpositionen adaptiert.

Was das genannte Ermitteln weiterer Signalwerte des ersten Farbkanals durch ein Verwenden der Ergänzungsbilddaten als weitere Signalwerte betrifft, so können alternativ zu einer (inversen) Transformation bei einer besonders einfachen Ausführungsform für den ersten Farbkanal der Farbbilddaten die Ergänzungsbilddaten unmittelbar oder in angepasster Form als weitere Signalwerte für die jeweils übereinstimmenden Bildpunkte verwendet werden, wobei zur Anpassung ein Adaptieren der Signalwerte der Ergänzungsbilddaten auf versetzte Bildpunktpositionen erforderlich ist, sowie die vierte räumliche Auflösung der erweiterten Farbbilddaten nicht mit der dritten räumlichen Auflösung der Ergänzungsbilddaten übereinstimmt.

Was das genannte Ermitteln weiterer Signalwerte der weiteren Farbkanäle durch ein Interpolieren von Signalwerten der weiteren Farbkanäle der Farbbilddaten betrifft, so können alternativ zu einer (inversen) Transformation für die weiteren Farbkanäle der Farbbilddaten die weiteren Signalwerte durch ein Interpolieren der Signalwerte des jeweiligen weiteren Farbkanals der Farbbilddaten ermittelt werden. Hierzu kann bei manchen Ausführungsformen aus den Ergänzungsbilddaten ein Gradient abgeleitet werden und dieser Gradient kann einer Gewichtung der genannten Interpolation zugrunde gelegt werden. Der Gradient kann direkt aus den Ergänzungsbilddaten abgeleitet sein, oder lediglich indirekt, nämlich aus den rekonstruierten Signalwerten des genannten einzigen Farbkanals der Ergänzungsbilddaten. Insbesondere kann der Gradient ein Signalwert-Gradient von Signalwerten des genannten einzigen Farbkanals der Ergänzungsbilddaten sein.

Bei anderen Ausführungsformen kann das genannte Umwandeln der Farbbilddaten in erweiterte Farbbilddaten insbesondere die folgenden Schritte umfassen:
- Einspeisen der Farbbilddaten und der Ergänzungsbilddaten in ein neuronales Netzwerk; und
- Erzeugen der erweiterten Farbbilddaten durch das neuronale Netzwerk.

Hierfür kann ein zuvor trainiertes neuronales Netzwerk verwendet werden.

Sofern zuvor ein Transformieren der Signalwerte der Sensorbilddaten durch eine diskrete Wavelet-Transformation erfolgt ist, können in das neuronale Netzwerk als Eingangswerte beispielsweise die genannten LL-, LH-, HL- und HH-Ortsfrequenzwerte des einzigen Farbkanals der Ergänzungsbilddaten (z.B. Grün-Farbkanal) sowie die jeweiligen LL-Ortsfrequenzwerte der weiteren Farbkanäle der Farbbilddaten (z.B. Rot- und Blau-Farbkanal) eingegeben werden, um die erweiterten Farbbilddaten gemäß der vierten räumlichen Auflösung mit wenigstens drei Farbkanälen zu ermitteln.

Das neuronale Netzwerk kann infolge entsprechenden Trainings auch zusätzliche Bildverarbeitungsschritte durchführen, beispielsweise eine Rauschreduzierung.

Bei sämtlichen der erläuterten Ausführungsformen für ein nachträgliches Aufbereiten der Farbbilddaten unter Verwendung der Ergänzungsbilddaten kann nach dem Aufbereiten optional noch eine Farbprozessierung (beispielsweise eine Farbraumtransformation) durchgeführt werden.

Bei anderen Ausführungsformen kann eine Farbprozessierung (insbesondere eine Farbraumtransformation) der Farbbilddaten bereits vor dem Aufbereiten der Farbbilddaten durchgeführt werden. Hierdurch kann der Rechenaufwand für das Aufbereiten der Farbbilddaten verringert werden, da diese noch keinen erweiterten Umfang besitzen.

Bei manchen Anwendungen kann ein Aufbereiten der Farbbilddaten unter Verwendung der Ergänzungsbilddaten auch ein Nachschärfen der Farbbilddaten für einen Bildbereich eines jeweiligen Einzelbilds umfassen. Insbesondere können die Farbbilddaten unter Verwendung der Ergänzungsbilddaten in bereichsweise geschärfte Farbbilddaten umgewandelt werden, die der zweiten räumlichen Auflösung entsprechen und wenigstens drei Farbkanäle umfassen, wobei für einen begrenzten Bildbereich, der einem zusammenhängenden Teil der zweiten Bildpunkte entspricht und jedoch kleiner ist als das gesamte jeweilige Einzelbild, die Signalwerte eines, mehrerer oder sämtlicher der wenigstens drei Farbkanäle der Farbbilddaten modifiziert werden, indem diese Signalwerte einem Werteverlauf innerhalb der Ergänzungsbilddaten angeglichen werden. Hierdurch kann beispielsweise eine räumliche Hochfrequenz-Information der Ergänzungsbilddaten auf die Farbbilddaten übertragen werden.

Bei anderen Anwendungen kann ein Aufbereiten der Farbbilddaten unter Verwendung der Ergänzungsbilddaten auch eine Helligkeitsaufbereitung umfassen (sogenannte Highlight Recovery). Insbesondere kann vorgesehen sein, dass die Farbbilddaten modifiziert werden, indem an den Farbbilddaten eine Farbraumtransformation durchgeführt wird, wobei die Farbbilddaten nach Durchführung der Farbraumtransformation in Abhängigkeit von den Ergänzungsbilddaten hinsichtlich ihrer jeweiligen Helligkeit korrigiert werden. Beispielsweise kann ein Farbabgleich durchgeführt werden, bei dem die wenigstens drei Farbkanäle der Farbbilddaten miteinander verrechnet werden, wobei teilweise irreversible Veränderungen der Bilddaten vorgenommen werden. Hierdurch können Helligkeitsinformationen innerhalb des jeweiligen Farbkanals verloren gehen. Jedoch können die Farbbilddaten nach Durchführung der Farbraumtransformation in Abhängigkeit von den Ergänzungsbilddaten hinsichtlich ihrer jeweiligen Helligkeit korrigiert werden, beispielsweise indem richtungsabhängige Helligkeitsverläufe der Ergänzungsbilddaten auf die derartig modifizierten Farbbilddaten übertragen werden. Zwischen dem Modifizieren der Farbbilddaten (z.B. Farbabgleich) und der Helligkeitsaufbereitung können die Farbbilddaten auch komprimiert, gespeichert, ausgelesen und dekomprimiert werden.

Ferner kann ein Aufbereiten der Farbbilddaten unter Verwendung der Ergänzungsbilddaten auch die Erzeugung von vergrößerten Bildausschnitten mit gleicher Auflösung wie das Ausgangsbild umfassen, also entsprechend der zweiten räumlichen Auflösung der Farbbilddaten (sogenanntes Reframing). Insbesondere kann vorgesehen sein, dass die Farbbilddaten eines begrenzten Bildbereichs, der einem zusammenhängenden Teil der zweiten Bildpunkte entspricht und jedoch kleiner ist als das gesamte jeweilige Einzelbild, ausgewählt werden (beispielsweise durch einen Anwender in der Postproduktion), wobei die nicht ausgewählten Farbbilddaten verworfen werden und die den gewählten Farbbilddaten entsprechenden Signalwerte und Bildpunktpositionen auf die zweite räumliche Auflösung skaliert werden (beispielsweise durch Interpolation), wobei die skalierten Signalwerte in Abhängigkeit von den Ergänzungsbilddaten modifiziert werden, um einen Schärfeverlauf und/oder einen Helligkeitsverlauf der skalierten Signalwerte einem Werteverlauf innerhalb der Ergänzungsbilddaten anzupassen. Hierdurch kann beispielsweise eine räumliche Hochfrequenz-Information der Ergänzungsbilddaten auf die skalierten Farbbilddaten übertragen werden. Beispielsweise kann das Skalieren basierend auf einer räumlichen Filterung erfolgen, die direkt oder indirekt einen Signalwert-Gradienten der Ergänzungsbilddaten berücksichtigt.

Bei weiteren Anwendungen kann ein Aufbereiten der Farbbilddaten unter Verwendung der Ergänzungsbilddaten ein lediglich temporäres lokales Erhöhen der Auflösung der Bilddaten für einen variablen Bildbereich umfassen. Insbesondere kann vorgesehen sein, dass während einer laufenden Aufzeichnung einer Bewegtbildsequenz mittels einer Kamera die Farbbilddaten in Abhängigkeit von den Ergänzungsbilddaten für einen begrenzten Bildbereich, der kleiner ist als das gesamte jeweilige Einzelbild der Bewegtbildsequenz, in erweiterte Farbbilddaten einer höheren Auflösung umgewandelt und an einer Anzeigeeinrichtung (beispielsweise Monitor oder Sucher) wiedergegeben werden. Beispielsweise können während der Aufzeichnung einer Bewegtbildszene in der Kamera generell nur die Farbbilddaten gemäß der zweiten räumlichen Auflösung prozessiert werden, um dem Anwender ein Vorschaubild zu bieten. Eine Prozessierung der vollen Auflösung (erste räumliche Auflösung der Sensorbilddaten) ist in der Kamera wegen limitierter Rechenressourcen oftmals nicht möglich oder nicht erwünscht. Allerdings benötigt ein Kameraassistent (beispielsweise sogenannter Focus Puller) manchmal die volle Auflösung oder eine höhere Auflösung als die genannte zweite räumliche Auflösung der Farbbilddaten, um an einer Anzeigeeinrichtung anhand einer Wiedergabe der Bilddaten beurteilen zu können, ob an dem Kameraobjektiv die Schärfe korrekt eingestellt ist. Die Ergänzungsbilddaten können in einem solchen Fall dazu genutzt werden, um das in der relativ niedrigen zweiten Auflösung prozessierte Bild hochzuskalieren und zumindest für einen auswählbaren begrenzten Bildbereich, der kleiner ist als das gesamte jeweilige Einzelbild (crop out), eine erhöhte oder die volle Auflösung anzubieten.

Bei manchen Anwendungen können die Ergänzungsbilddaten für ein Erzeugen von elektronischen Stanzmasken (sogenannte Chroma Keys) genutzt werden, wobei die Ergänzungsbilddaten dazu verwendet werden, in den Farbbilddaten eine Vordergrund-Bildinformation von einer Hintergrund-Bildinformation zu trennen. Bei der Nachbearbeitung einer aufgezeichneten Bewegtbildszene ist es oftmals erforderlich, einen Schauspieler vom Hintergrund freizustellen (z.B. bei Greenscreen-Aufnahmen). Häufig wird bei der Arbeit an visuellen Effekten nicht die volle Auflösung genutzt, da dies viel Rechenkapazität und Speicherplatz benötigt. Für ein Freistellen eines Schauspielers vom Hintergrund sind jedoch häufig höhere Auflösungen von Vorteil als jenes des erzeugten Endbildes, um auch feine Strukturen (wie z.B. Haare) präzise zu erfassen. Gemäß einer vorteilhaften Anwendung können also die Farbbilddaten für das tatsächliche Rendern des Endbildes genutzt werden, während die Ergänzungsbilddaten lediglich für das erläuterte Freistellen eines Vordergrunds von dem Hintergrund verwendet werden.

Die Erfindung bezieht sich auch unabhängig von dem Erzeugen und Speichern der Farbbilddaten und Ergänzungsbilddaten auf ein Verfahren zum Aufbereiten von Farbbilddaten, die auf Sensorbilddaten einer ersten räumlichen Auflösung beruhen, unter Verwendung von Ergänzungsbilddaten, wobei das Verfahren die folgenden Schritte umfasst:
- Bereitstellen von Farbbilddaten, die einer zweiten räumlichen Auflösung entsprechen und wenigstens drei Farbkanäle umfassen, wobei die zweite räumliche Auflösung einer Anzahl von zweiten Bildpunkten entspricht und die Farbbilddaten für jeden der zweiten Bildpunkte wenigstens drei Signalwerte gemäß den wenigstens drei Farbkanälen der Farbbilddaten umfassen;
- Bereitstellen von Ergänzungsbilddaten, die einer dritten räumlichen Auflösung entsprechen und nur einen einzigen Farbkanal umfassen, wobei die dritte räumliche Auflösung einer Anzahl von dritten Bildpunkten entspricht und die Ergänzungsbilddaten für jeden der dritten Bildpunkte nur einen Signalwert gemäß dem einzigen Farbkanal der Ergänzungsbilddaten umfassen; und
- Umwandeln der Farbbilddaten unter Verwendung der Ergänzungsbilddaten in erweiterte Farbbilddaten, die einer vierten räumlichen Auflösung entsprechen und wenigstens drei Farbkanäle umfassen, wobei die vierte räumliche Auflösung einer Anzahl von vierten Bildpunkten entspricht und die erweiterten Farbbilddaten für jeden der vierten Bildpunkte wenigstens drei Signalwerte gemäß den wenigstens drei Farbkanälen der erweiterten Farbbilddaten umfassen, wobei die vierte räumliche Auflösung der erweiterten Farbbilddaten höher ist als die zweite räumliche Auflösung der Farbbilddaten.

Dieses Verfahren kann im Übrigen ausgeführt und weitergebildet sein wie vorstehend für die verschiedenen Ausführungsformen erläutert. Insbesondere kann das Umwandeln der Farbbilddaten in erweiterte Farbbilddaten unter Verwendung der Ergänzungsbilddaten die folgenden Schritte umfassen:
- Ermitteln weiterer Signalwerte eines ersten Farbkanals der wenigstens drei Farbkanäle der Farbbilddaten, welcher dem genannten einzigen Farbkanal der Ergänzungsbilddaten entspricht, so dass für jeden der vierten Bildpunkte ein Signalwert gemäß dem ersten Farbkanal der Farbbilddaten vorliegt, wobei diese weiteren Signalwerte aus den Ergänzungsbilddaten und aus den Signalwerten des ersten Farbkanals der Farbbilddaten durch ein Transformieren von Ortsfrequenzwerten in weitere Signalwerte oder durch ein Verwenden der Ergänzungsbilddaten als zusätzliche Signalwerte ermittelt werden;
- Ermitteln weiterer Signalwerte der weiteren Farbkanäle der wenigstens drei Farbkanäle der Farbbilddaten, so dass für jeden der vierten Bildpunkte Signalwerte gemäß den weiteren Farbkanälen der Farbbilddaten vorliegen, wobei diese weiteren Signalwerte aus den Ergänzungsbilddaten und aus den Signalwerten der weiteren Farbkanäle der Farbbilddaten durch ein Transformieren von Ortsfrequenzwerten in weitere Signalwerte oder durch ein Interpolieren von Signalwerten der weiteren Farbkanäle der Farbbilddaten ermittelt werden, wobei das Interpolieren insbesondere einen aus den Ergänzungsbilddaten abgeleiteten Gradienten berücksichtigen kann.

Das erläuterte Verfahren zum Verarbeiten und Speichern von Bilddaten kann, wie bereits erwähnt, teilweise oder vollständig in einer von einer Kamera separaten Datenverarbeitungseinrichtung durchgeführt werden. Allerdings kann das Verfahren auch teilweise oder vollständig in einer Kamera durchgeführt werden. Die Erfindung bezieht sich somit auch auf ein Kamerasystem mit einer Kamera und wenigstens einem Datenspeicher, wobei die Kamera einen Bildsensor zum Erzeugen von Sensorbilddaten und eine Signalverarbeitungseinrichtung zum Verarbeiten der Sensorbilddaten aufweist, wobei der wenigstens eine Datenspeicher mit der Kamera verbunden oder koppelbar ist, und wobei die Signalverarbeitungseinrichtung zur Ausführung des Verfahrens nach einer der vorstehend erläuterten Ausführungsformen ausgebildet ist. Der Bildsensor kann wie erläutert eine Vielzahl von lichtempfindlichen Sensorelementen umfassen, wobei die Sensorbilddaten Bildsignalen der lichtempfindlichen Sensorelemente entsprechen. Die Signalverarbeitungseinrichtung kann wie erläutert einen Mikroprozessor, eine zentrale Recheneinheit (CPU), eine Grafikprozessoreinheit (GPU), eine Anwendungsspezifische Integrierte Schaltung (ASIC) und/oder ein Field Programmable Gate Array (FPGA) umfassen.

Die Kamera kann ferner eine dem Bildsensor zugeordnete Ausleseelektronik mit unterschiedlichen Komponenten umfassen. Die Ausleseelektronik der Kamera kann beispielsweise Verstärker, Analog-Digital-Wandler oder elektronische Komponenten zur Signalverarbeitung oder Steuerung umfassen, insbesondere einen Mikroprozessor, eine zentrale Recheneinheit (CPU), eine Grafikprozessoreinheit (GPU), eine Anwendungsspezifische Integrierte Schaltung (ASIC) und/oder ein Field Programmable Gate Array (FPGA).

Die Kamera kann ferner die bereits genannte Anzeigeeinrichtung (beispielsweise Monitor, Sucher) zum Wiedergeben einer aufgezeichneten Bewegtbildsequenz (insbesondere der Farbbilddaten) umfassen.

Die Erfindung wird nachfolgend lediglich beispielhaft unter Bezugnahme auf die Zeichnungen erläutert. Gleiche oder gleichartige Elemente oder Verfahrensschritte sind darin mit denselben Bezugszeichen gekennzeichnet.
- Fig. 1: zeigt schematisch den Ablauf eines Verfahrens zum Erzeugen von Farbbilddaten und Ergänzungsbilddaten unterschiedlicher räumlicher Auflösung basierend auf den Sensorbilddaten.
- Fig. 2: zeigt Einzelheiten einer Ausführungsform des Verfahrens gemäß Fig. 1.
- Fig. 3: zeigt Einzelheiten einer Abwandlung des Verfahrens gemäß Fig. 1.
- Fig. 4: veranschaulicht mögliche Verhältnisse zwischen den Ausgangswerten einer diskreten Wavelet-Transformation.
- Fig. 5: zeigt den Ablauf eines Verfahrens zum Umwandeln von Farbbilddaten in erweiterte Farbbilddaten durch Verwendung von Ergänzungsbilddaten höherer räumlicher Auflösung.
- Fig. 6: zeigt ein Kamerasystem mit einer Kamera und zwei Datenspeichern zur Durchführung des Verfahrens gemäß Fig. 1.

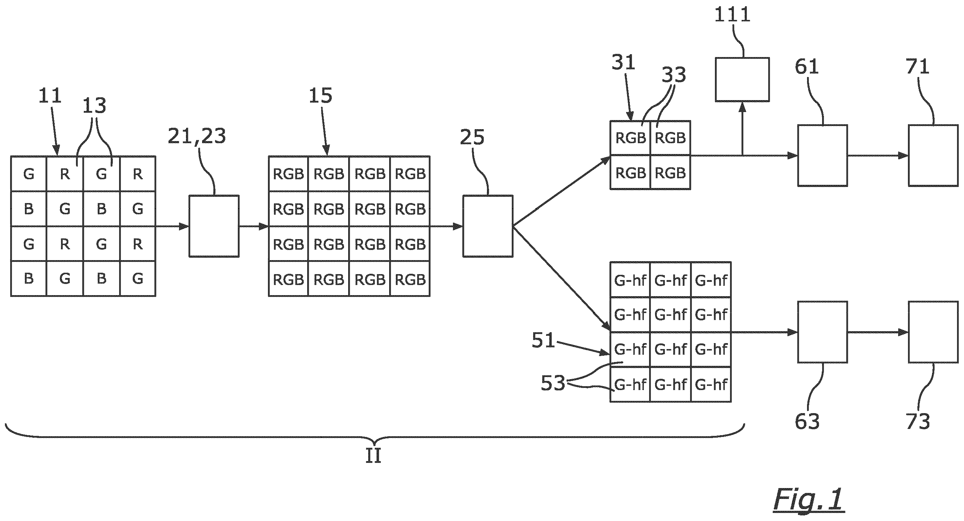

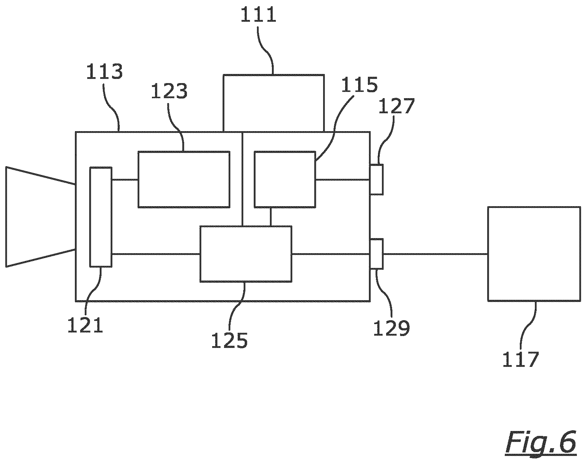

Das in Fig. 1 gezeigte Verfahren basiert auf Sensorbilddaten 11, die vor oder während der Durchführung des Verfahrens von einem Bildsensor einer Kamera erzeugt worden sind oder erzeugt werden, beispielsweise von der in Fig. 6 gezeigten Kamera.

Die Sensorbilddaten 11 liegen als Mosaikbilddaten gemäß dem Bayer-Muster des verwendeten Bildsensors vor, wobei bezogen auf eine Anordnung von vier in zwei Zeilen und zwei Spalten angeordneten Bildpunkten zwei diagonal zueinander angeordneten Bildpunkten ein Grün-Signalwert G und den beiden übrigen Bildpunkten ein Rot-Signalwert R bzw. ein Blau-Signalwert B zugeordnet sind. Die Sensorbilddaten 11 besitzen eine erste räumliche Auflösung und umfassen drei Farbkanäle, nämlich entsprechend den Grün-, Rot- und Blau-Signalwerten G, R, B. Die genannte erste räumliche Auflösung entspricht einer Anzahl von ersten Bildpunkten 13, von denen beispielhaft nur insgesamt 16 Bildpunkte 13 gezeigt sind. Jedem der ersten Bildpunkte 13 ist nur ein Signalwert G, R oder B zugeordnet.

Optional kann in einem Vorverarbeitungsschritt 21 eine Korrektur einzelner Sensorbilddaten erfolgen, und/oder es kann ein Weißabgleich zwischen den drei Farbkanälen der Sensorbilddaten 11 durchgeführt werden. Ferner kann in dem Vorverarbeitungsschritt 21 optional eine (erste) Rauschreduzierung an den Sensorbilddaten 11 durchgeführt werden.

Basierend auf den Sensorbilddaten 11 werden Farbbilddaten 31 und Ergänzungsbilddaten 51 unterschiedlicher räumlicher Auflösung erzeugt. Hierfür werden bei dem Ausführungsbeispiel gemäß Fig. 1 die Sensorbilddaten 11 zunächst in einem Interpolationsschritt 23 interpoliert, um für jeden der ersten Bildpunkte 13 zwei weitere Signalwerte zu ermitteln, nämlich entsprechend den jeweils noch nicht repräsentierten Farbkanälen, so dass nun für jeden der ersten Bildpunkte 13 und für jeden der drei Farbkanäle der Sensorbilddaten 11 ein jeweiliger Signalwert G, R, B vorliegt. Bei dem Interpolationsschritt 23 können auch Signalwerte G, R, B der jeweils anderen Farbkanäle und/oder deren Gradienten berücksichtigt werden. Die Anzahl der Bildpunkte 13 der interpolierten Bilddaten 15 ist unverändert. Somit liegt ein RGB-Bild hoher Auflösung vor, das ohne weitere Maßnahmen jedoch entsprechend hohe Speicher-, Bandbreiten- und Rechenkapazitäten erfordern würde.

In einem nachfolgenden Transformationsschritt 25 werden für jeden der drei Farbkanäle der interpolierten Bilddaten 15 die Signalwerte R, G, B durch eine diskrete Wavelet-Transformation in Ortsfrequenzwerte transformiert. Hierdurch werden die interpolierten Bilddaten 15 in unterschiedliche räumliche Frequenzen zerlegt. Als Farbbilddaten 31 werden nunmehr für jeden der drei Farbkanäle solche Ortsfrequenzwerte ermittelt, die niedrigen Ortsfrequenzen der (transformierten) Sensorbilddaten-Signalwerte entsprechen, wobei die Farbbilddaten 31 entsprechend der gewählten niedrigen Ortsfrequenzen eine geringere zweite räumliche Auflösung besitzen und dementsprechend eine geringere Anzahl von zweiten Bildpunkten 33 umfassen als die Sensorbilddaten 11. Beispielhaft sind vier zweite Bildpunkte 33 gezeigt. Für jeden der zweiten Bildpunkte 33 und für jeden der drei Farbkanäle der Farbbilddaten 31 liegt wiederum ein jeweiliger Signalwert G, R, B vor. Somit bilden die Farbbilddaten 31 ein RGB-Bild, das bereits unmittelbar beobachtbar ist (jedoch mit einer unnatürlichen Frequenzverteilung) und infolge eines optionalen Filterschritts mit nahezu natürlicher Frequenzverteilung beobachtbar ist. Beispielsweise kann die erste räumliche Auflösung der Sensorbilddaten 11 8K betragen, während die zweite räumliche Auflösung der Farbbilddaten 31 4K beträgt. Allerdings sind auch nicht-dyadische Verhältnisse möglich (beispielsweise 8K zu 6K), in Abhängigkeit von der Auswahl der niedrigen Ortsfrequenzen nach der Transformation der Sensorbilddaten 11.

Die Ergänzungsbilddaten 51 werden durch Auswählen der relativ höheren Ortsfrequenzen der (transformierten) Sensorbilddaten-Signalwerte erzeugt, und zwar nur für einen einzigen Farbkanal, der die räumliche Änderung der Helligkeitsverteilung am besten repräsentiert. Dies ist der Farbkanal, für den die Signalwerte G der Sensorbilddaten 11 die höchste relative Häufigkeit besitzen; wie erläutert ist dies der Grün-Farbkanal. Die Ergänzungsbilddaten 51 besitzen entsprechend der gewählten relativ höheren Ortsfrequenzen eine dritte räumliche Auflösung, die einer Anzahl von dritten Bildpunkten 53 entspricht. Die Ergänzungsbilddaten 51 repräsentieren keinerlei Farbinformation und umfassen für jeden der dritten Bildpunkte 53 nur einen einzigen Ortsfrequenzwert Ghf, der einer hohen Ortsfrequenz entspricht.

Optional kann nun eine (zweite) Rauschreduzierung an den Farbbilddaten 31 und an den Ergänzungsbilddaten 51 durchgeführt werden. Diese Rauschreduzierung kann hinsichtlich der Farbbilddaten 31 und der Ergänzungsbilddaten 51 unterschiedlich durchgeführt werden, und sie kann hinsichtlich der Farbbilddaten 31 für Ortsfrequenzwerte, die hohen Ortsfrequenzen entsprechen, auf andere Weise durchgeführt werden als für Ortsfrequenzwerte, die niedrigen Ortsfrequenzen entsprechen.

Die Farbbilddaten 31 und die Ergänzungsbilddaten 51 können nun unabhängig voneinander unmittelbar gespeichert werden. Sofern die Sensorbilddaten 11 einer Bewegtbildsequenz zugeordnet sind, die von einer Kamera aufgenommen wird, können die bereits erzeugten Farbbilddaten 31 während des noch andauernden Erzeugens von weiteren Sensorbilddaten 11 jedoch auch an einer Anzeigeeinrichtung 111 der Kamera wiedergegeben werden (beispielsweise Kamerasucher, Monitor).

Für zahlreiche Anwendungen ist es ferner erwünscht, dass die Bilddaten für das Speichern und für die Übertragung zu einem jeweiligen Datenspeicher komprimiert werden. Ein besonderer Vorteil der Zerlegung der Sensorbilddaten 11 in die Farbbilddaten 31 und die Ergänzungsbilddaten 51 besteht darin, dass für diese zwei verschiedenen Arten und Formate von Bilddaten 31, 51 jeweils besonders geeignete und somit effiziente Kompressionsverfahren zum Einsatz gelangen können. Somit kann für die Farbbilddaten 31 und die Ergänzungsbilddaten 51 zunächst ein jeweiliger Kompressionsschritt 61 bzw. 63 durchgeführt werden. Beispielsweise können die Farbbilddaten 31 gemäß einem Kompressionsverfahren komprimiert werden, welches auf einer diskreten Wavelet-Transformation oder einer diskreten Kosinustransformation mit nachfolgender Quantisierung und Entropiekodierung basiert, während die Ergänzungsbilddaten 51 gemäß einem Kompressionsverfahren komprimiert werden, welches unmittelbar auf einer Quantisierung mit nachfolgender Entropiekodierung basiert (also ohne vorangegangene diskrete Wavelet-Transformation oder diskrete Kosinustransformation).

Unabhängig davon, ob eine derartige Kompression der jeweiligen Bilddaten und/oder Rauschreduzierung erfolgt, können die Farbbilddaten 31 und die Ergänzungsbilddaten 51 nun gespeichert werden, nämlich in einem gemeinsamen Datenspeicher oder in separaten Datenspeichern 71 bzw. 73. Das Speichern der Farbbilddaten 31 und der Ergänzungsbilddaten 31 erfolgt jedenfalls derart, dass auf die Farbbilddaten 31 unabhängig von den Ergänzungsbilddaten 51 zugegriffen werden kann. Somit können die Farbbilddaten 31 ersten weiterführenden Verarbeitungsschritten unterzogen werden, während eine Aufbereitung der Farbbilddaten 31 unter Verwendung der Ergänzungsbilddaten 51 wahlweise erst zu einem späteren Zeitpunkt oder in einem späteren Stadium der Verarbeitung der Farbbilddaten 31 erfolgen kann.

Wenn die Sensorbilddaten 11 von einem Bildsensor einer Kamera erzeugt werden, können die Farbbilddaten 31 und/oder die Ergänzungsbilddaten 51 beispielsweise über ein Weitverkehrsnetzwerk (WAN) oder das Internet in einem Cloud-Speicher als Datenspeicher 71 gespeichert werden, wobei die Farbbilddaten 31 und/oder die Ergänzungsbilddaten 51 (jeweils alternativ oder zusätzlich) in einem Datenspeicher 73 der Kamera oder in einem über eine lokale Datenverbindung mit der Kamera verbundenen Datenspeicher 73 gespeichert werden können.

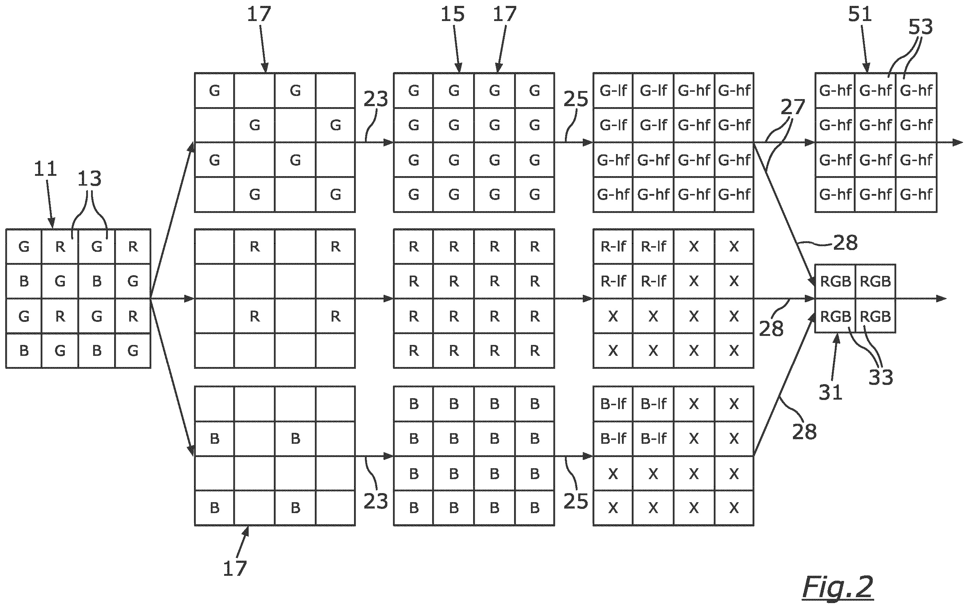

Fig. 2 zeigt zur näheren Erläuterung des Abschnitts II gemäß Fig. 1 weitere Einzelheiten des vorstehend erläuterten Verfahrens.

Fig. 2 illustriert, dass die drei Farbkanäle der Sensorbilddaten 11 entsprechend dem Bayer-Muster unterschiedlich repräsentiert sind, wobei die relative Häufigkeit von Grün-Signalwerten G doppelt so hoch ist wie die relative Häufigkeit von Rot-Signalwerten R oder Blau-Signalwerten B. Infolge der Interpolation 23 liegen für jeden der ersten Bildpunkte 13 drei Signalwerte G, R oder B vor, die in Fig. 2 als drei separate Farbebenen 17 illustriert sind, entsprechend den drei Farbkanälen. Durch die Transformation 25 (einschließlich einer Zerlegung nach Ortsfrequenzen) werden für die Grün-Signalwerte G transformierte Grün-Signalwerte (Ortsfrequenzwerte Glf) einer niedrigen Ortsfrequenz sowie transformierte Grün-Signalwerte (Ortsfrequenzwerte Ghf) einer hohen Ortsfrequenz erzeugt. Ferner werden durch die Transformation 25 für die Rot-Signalwerte R transformierte Rot-Signalwerte (Ortsfrequenzwerte RIf) einer niedrigen Ortsfrequenz erzeugt, wobei transformierte Rot-Signalwerte einer hohen Ortsfrequenz nicht erzeugt oder unmittelbar verworfen werden (in Fig. 2 durch "X" symbolisiert). Entsprechendes gilt für den Blau-Farbkanal, d.h. durch die Transformation 25 für die Blau-Signalwerte B werden transformierte Blau-Signalwerte (Ortsfrequenzwerte Blf) einer niedrigen Ortsfrequenz erzeugt, wobei transformierte Blau-Signalwerte einer hohen Ortsfrequenz nicht erzeugt oder unmittelbar verworfen werden. Die transformierten Grün-Signalwerte (Ortsfrequenzwerte Ghf) der hohen Ortsfrequenz bilden aufgrund eines Auswahlschritts 27 einen separaten Datensatz der Ergänzungsbilddaten 51. Die transformierten Grün-Signalwerte (Ortsfrequenzwerte Glf) der niedrigen Ortsfrequenz, die transformierten Rot-Signalwerte (Ortsfrequenzwerte Rlf) der niedrigen Ortsfrequenz und die transformierten Blau-Signalwerte (Ortsfrequenzwerte Blf) der niedrigen Ortsfrequenz werden in einem Kombinationsschritt 28 zu einem separaten Datensatz der Farbbilddaten 31 zusammengesetzt.

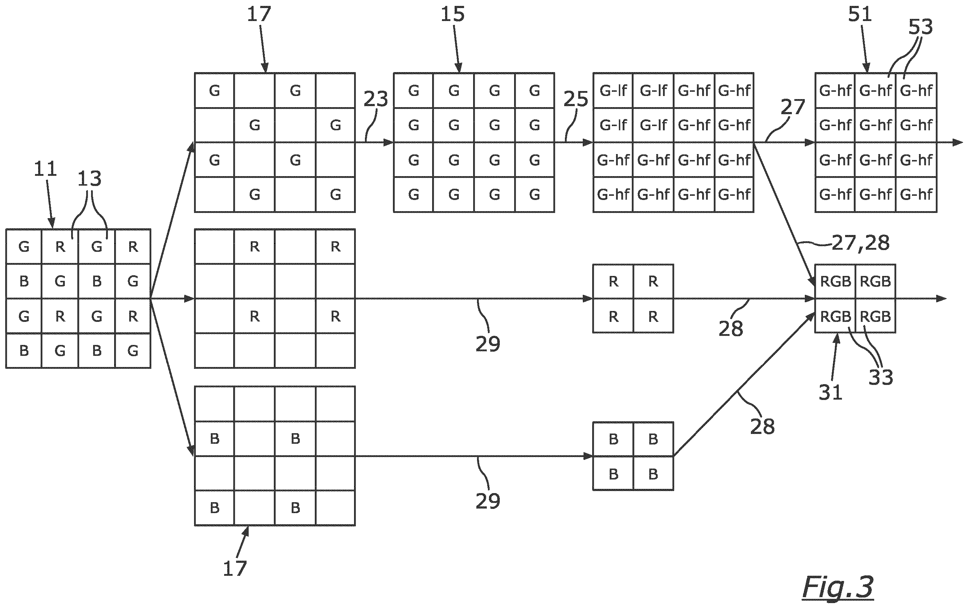

Fig. 3 zeigt Einzelheiten einer Abwandlung des Verfahrens gemäß Fig. 1, wobei sich die Abwandlung auf den Abschnitt II gemäß Fig. 1 bezieht und die weiteren Schritte gemäß Fig. 1 (Anzeigen der Farbbilddaten, optional Rauschreduzierung, Komprimieren, Speichern der Bilddaten) auch bei der Abwandlung gemäß Fig. 3 durchgeführt werden können.

Ausgangspunkt sind neuerlich Sensorbilddaten 11, die von einem Bildsensor einer Kamera erzeugt worden sind oder erzeugt werden. Die Sensorbilddaten 11 liegen als Mosaikbilddaten vor und besitzen eine erste räumliche Auflösung mit einer Anzahl von ersten Bildpunkten 13. Die Sensorbilddaten 11 umfassen drei Farbkanäle, wobei jedem der ersten Bildpunkte 13 nur ein Signalwert G, R oder B zugeordnet ist. Optional kann ein Vorverarbeitungsschritt 21 durchgeführt werden wie im Zusammenhang mit Fig. 1 erläutert.

Basierend auf den Sensorbilddaten 11 werden Farbbilddaten 31 und Ergänzungsbilddaten 51 unterschiedlicher räumlicher Auflösung erzeugt. Hierfür werden bei dem Ausführungsbeispiel gemäß Fig. 3 die Sensorbilddaten 11 lediglich des Grün-Farbkanals in einem Interpolationsschritt 23 interpoliert, um für diejenigen der ersten Bildpunkte 13, für die noch kein Signalwert gemäß dem Grün-Farbkanal vorliegt, einen Grün-Signalwert G zu ermitteln. Bei dem Interpolationsschritt 23 können auch Signalwerte R, B der anderen Farbkanäle und/oder deren Gradienten berücksichtigt werden. Somit liegt für jeden der ersten Bildpunkte 13 ein Signalwert G gemäß dem Grün-Farbkanal vor. In einem nachfolgenden Transformationsschritt 25 werden (nur) für den Grün-Farbkanal der interpolierten Bilddaten 15 die Signalwerte G durch eine diskrete Wavelet-Transformation in Ortsfrequenzwerte transformiert. Hierdurch werden die interpolierten Bilddaten 15 des Grün-Farbkanals in unterschiedliche räumliche Frequenzen zerlegt.

Die Ergänzungsbilddaten 51 werden durch Auswählen der relativ höheren Ortsfrequenzen der (transformierten) Grün-Signalwerte erzeugt (Auswahlschritt 27), und zwar nur für den Grün-Farbkanal, der - wie vorstehend erläutert - die räumliche Änderung der Helligkeitsverteilung am besten repräsentiert. Durch die Transformation 25 (einschließlich einer Zerlegung nach Ortsfrequenzen) werden für die Grün-Signalwerte G transformierte Grün-Signalwerte (Ortsfrequenzwerte Glf) einer (relativ) niedrigen Ortsfrequenz sowie transformierte Grün-Signalwerte (Ortsfrequenzwerte Ghf) einer (relativ) hohen Ortsfrequenz erzeugt. Die transformierten Grün-Signalwerte (Ortsfrequenzwerte Ghf) der hohen Ortsfrequenz bilden einen separaten Datensatz der Ergänzungsbilddaten 51. Die Ergänzungsbilddaten 51 besitzen entsprechend der gewählten Ortsfrequenzen eine dritte räumliche Auflösung, die einer Anzahl von dritten Bildpunkten 53 entspricht. Die Ergänzungsbilddaten 51 repräsentieren keinerlei Farbinformation und umfassen für jeden der dritten Bildpunkte 53 nur einen einzigen Ortsfrequenzwert Ghf, der einer hohen Ortsfrequenz entspricht.

Um die Farbbilddaten 31 zu erzeugen, wird für den Grün-Farbkanal einerseits und für den Rot-Farbkanal und den Blau-Farbkanal andererseits unterschiedlich vorgegangen. Die Farbbilddaten 31 des Grün-Farbkanals werden in einem oder dem Auswahlschritt 27 durch Auswählen der transformierten Grün-Signalwerte (Ortsfrequenzwerte Glf) der niedrigen Ortsfrequenz ermittelt. Die Farbbilddaten 31 des Rot-Farbkanals und des Blau-Farbkanals werden durch Adaptieren der Rot- und Blau-Signalwerte der Sensorbilddaten 11 auf Bildpunktpositionen erzeugt, die den Bildpunktpositionen der transformierten Grün-Signalwerte (Ortsfrequenzwerte Glf) entsprechen (Adaptierungsschritt 29). Dieses Adaptieren der Rot- und Blau-Signalwerte auf die genannten Bildpunktpositionen kann beispielsweise durch eine räumliche Filterung erfolgen, welche die Signalwerte R, B des jeweiligen Farbkanals (also Rot oder Blau) an benachbarten Bildpunktpositionen und Signalwerte G des Grün-Farbkanals an benachbarten Bildpunktpositionen berücksichtigt (vorzugsweise nicht nur die originären, sondern auch die interpolierten Grün-Signalwerte G). Insbesondere können die Signalwerte R, B des jeweiligen Farbkanals an benachbarten Bildpunktpositionen durch Anwenden einer gewichteten Interpolation berücksichtigt werden, wobei die Signalwerte G des Grün-Farbkanals an benachbarten Bildpunktpositionen dazu verwendet werden, die Gewichtung der genannten Interpolation festzulegen, beispielsweise durch Bildung eines Gradienten der Signalwerte G des Grün-Farbkanals (originäre Signalwerte und vorzugsweise auch interpolierte Signalwerte). Die ausgewählten Farbbilddaten 31 des Grün-Farbkanals (Ortsfrequenzwerte Glf der niedrigen Ortsfrequenz) und die adaptierten Rot- und Blau-Signalwerte R, B werden in einem Kombinationsschritt 28 zu einem separaten Datensatz der Farbbilddaten 31 zusammengesetzt.

Die Farbbilddaten 31 besitzen eine zweite räumliche Auflösung, die geringer ist als die erste räumliche Auflösung der Sensorbilddaten 11 und die gemäß der relativen Häufigkeit der verschiedenen Signalwerte G, R, B innerhalb der Sensorbilddaten 11 im Falle eines Bayer-Musters beispielsweise ein Viertel der ersten räumlichen Auflösung betragen kann. Die Farbbilddaten 31 umfassen eine der geringeren zweiten räumlichen Auflösung entsprechende geringere Anzahl von zweiten Bildpunkten 33 als die Sensorbilddaten 11. Die dritte räumliche Auflösung der Ergänzungsbilddaten 51 kann höher sein als die zweite räumliche Auflösung der Farbbilddaten 31; dies ist jedoch nicht zwingend der Fall.

Auch bei dem Ausführungsbeispiel gemäß Fig. 3 können die Farbbilddaten 31 und die Ergänzungsbilddaten 51 können nun unabhängig voneinander unmittelbar gespeichert werden, wie im Zusammenhang mit Fig. 1 erläutert.

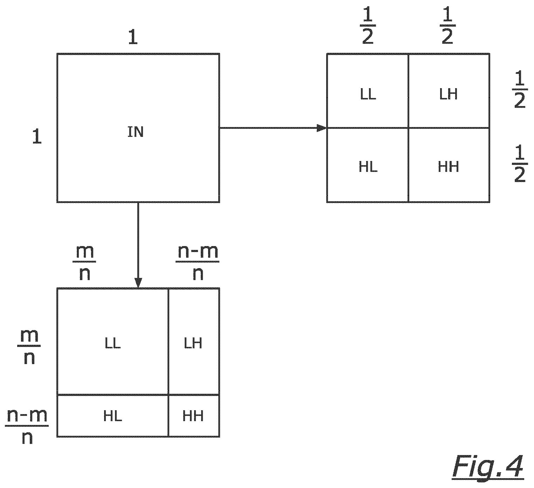

Fig. 4 bezieht sich auf die Ausgangswerte einer diskreten Wavelet-Transformation gemäß dem Transformationsschritt 25 nach Fig. 1 oder Fig. 3 und veranschaulicht mögliche Verhältnisse zwischen den Ortsfrequenzwerten höherer Ortsfrequenz und den Ortsfrequenzwerten niedrigerer Ortsfrequenz. Wie erläutert können die Ausgangswerte der diskreten Wavelet-Transformation in LL-Ortsfrequenzwerte (Tiefpassfilterung in horizontaler und vertikaler Richtung), LH-Ortsfrequenzwerte (Tiefpassfilterung in horizontaler Richtung, Hochpassfilterung in vertikaler Richtung), HL-Ortsfrequenzwerte (Hochpassfilterung in horizontaler Richtung, Tiefpassfilterung in vertikaler Richtung) und HH-Ortsfrequenzwerte (Hochpassfilterung in horizontaler und vertikaler Richtung) unterteilt werden.

Das Quadrat mit der Seitenlänge 1 symbolisiert die Anzahl der Eingangswerte IN (entsprechend der Auflösung der Eingangsbilddaten). Die Seitenlängen und entsprechenden Größen der weiteren Quadrate bzw. Rechtecke in Fig. 4 symbolisieren die Anzahl der Ausgangswerte (Ortsfrequenzwerte) für die unterschiedlichen Frequenzbereiche LL, LH, HL und HH. Die Gesamtzahl der Ausgangswerte ist zwar die gleiche wie die Anzahl der Eingangswerte. Allerdings hängt die Zuordnung der Ausgangswerte zu den verschiedenen Frequenzbereichen von der gewünschten Anzahl der Ausgangswerte relativ zu der Anzahl der Eingangswerte ab. Der Grenzwert der Filterung nach Ortsfrequenzen muss entsprechend gewählt werden.

Der Pfeil nach rechts zeigt den Fall eines dyadischen Verhältnisses zwischen der Auflösung der Eingangsbilddaten IN (beispielsweise Grün-Farbkanal der interpolierten Bilddaten 15 gemäß Fig. 1) und der Auflösung der Ausgangsbilddaten LL niedriger Ortsfrequenz in horizontaler und vertikaler Richtung (beispielsweise Grün-Farbkanal der Farbbilddaten 31 gemäß Fig. 1), die hier ein Viertel der Auflösung der Eingangsbilddaten IN beträgt. Bezogen auf Fig. 1 bedeutet dies, dass die dritte räumliche Auflösung der Ergänzungsbilddaten 51 (LH-, HL- und HH-Ortsfrequenzwerte) um einen Faktor 3 größer ist als die zweite räumliche Auflösung der Farbbilddaten 31.

Der Pfeil nach unten zeigt den Fall eines nicht-dyadischen Verhältnisses zwischen der Auflösung der Eingangsbilddaten IN und der Auflösung der Ausgangsbilddaten LL aufgrund einer entsprechend gewählter Grenzfrequenz. Hier kann die zweite räumliche Auflösung (beispielsweise Farbbilddaten 31 gemäß Fig. 1) größer sein als die dritte räumliche Auflösung (beispielsweise Ergänzungsbilddaten 51 gemäß Fig. 1).

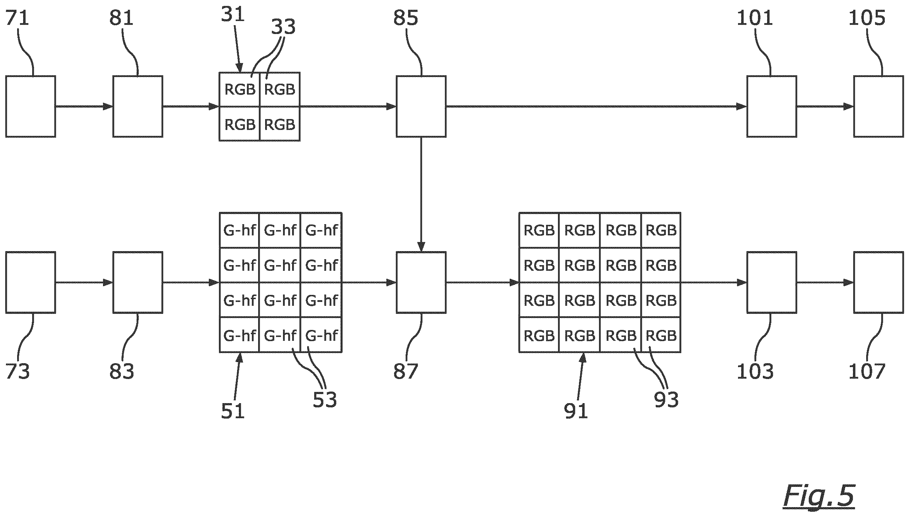

Fig. 5 veranschaulicht den Ablauf eines Verfahrens zum Umwandeln von Farbbilddaten 31 in erweiterte Farbbilddaten 91 durch Verwendung von zugeordneten Ergänzungsbilddaten 51 höherer räumlicher Auflösung (sogenanntes Rekonstruieren).

Ausgangspunkt können Farbbilddaten 31 sein, die eine zweite räumliche Auflösung besitzen und aus einem Datenspeicher 71 ausgelesen werden, sowie Ergänzungsbilddaten 51, die eine dritte räumliche Auflösung besitzen und aus demselben Datenspeicher 71 oder einem anderen Datenspeicher 73 ausgelesen werden.

Es sei unterstellt, dass die Farbbilddaten 31 und die erweiterten Farbbilddaten 91 dem Bayer-Muster entsprechen und somit eine größere relative Häufigkeit von Grün-Signalwerten G besitzen als die jeweilige relative Häufigkeit von Rot-Signalwerten R oder Blau-Signalwerten B, wie im Zusammenhang mit Fig. 1 bis 3 erläutert.

Ferner sei unterstellt, dass die Ergänzungsbilddaten 51 durch eine Transformation 25 (einschließlich einer Zerlegung nach Ortsfrequenzen) erzeugt wurden und durch transformierte Grün-Signalwerte (Ortsfrequenzwerte Ghf) einer hohen Ortsfrequenz gebildet sind, wie im Zusammenhang mit Fig. 1 bis 3 erläutert.

Sofern die Farbbilddaten 31 und/oder die Ergänzungsbilddaten 51 in komprimierter Form gespeichert sind, kann in einem jeweiligen Dekompressionsschritt 81 bzw. 83 ein Dekomprimieren der jeweiligen Bilddaten 31, 51 erfolgen. Die Farbbilddaten 31 können optional in einem Schritt 85 auch noch einer Weißabgleichskorrektur unterzogen werden.

In einem Aufbereitungsschritt 87 werden die Farbbilddaten 31 unter Verwendung der Ergänzungsbilddaten 51 in erweiterte Farbbilddaten 91 umgewandelt, die einer vierten räumlichen Auflösung entsprechen und drei Farbkanäle umfassen, nämlich Grün, Rot und Blau. Die vierte räumliche Auflösung entspricht einer Anzahl von vierten Bildpunkten 93, wobei die erweiterten Farbbilddaten 91 für jeden der vierten Bildpunkte 93 drei Signalwerte G, R, B umfassen. Mit anderen Worten bilden die erweiterten Farbbilddaten 91 einen RGB-Bilddatensatz. Wie in Fig. 5 illustriert ist, ist die vierte räumliche Auflösung der erweiterten Farbbilddaten 81 höher als die zweite räumliche Auflösung der Farbbilddaten 31 und auch höher als die dritte räumliche Auflösung der Ergänzungsbilddaten 51.

Für das Umwandeln der Farbbilddaten 31 in erweiterte Farbbilddaten 91 können in dem Aufbereitungsschritt 87 weitere Grün-Signalwerte G des Grün-Farbkanals der Farbbilddaten 31 entsprechend der vierten räumlichen Auflösung ermittelt werden, so dass für jeden der vierten Bildpunkte 93 ein Grün-Signalwert G vorliegt. Diese weiteren Grün-Signalwerte G können aus den Ergänzungsbilddaten 91 (Ortsfrequenzwerte Ghf einer hohen Ortsfrequenz) und aus den Grün-Signalwerten G der Farbbilddaten 31 durch eine Transformation ermittelt werden. Diese Transformation kann einer Inversen der für das Erzeugen der Ergänzungsbilddaten 51 verwendeten Transformation entsprechen.

Ferner können in dem Aufbereitungsschritt 87 weitere Rot-Signalwerte R und weitere Blau-Signalwerte B des Rot-Farbkanals bzw. des Blau-Farbkanals der Farbbilddaten 31 entsprechend der vierten räumlichen Auflösung ermittelt werden, so dass für jeden der vierten Bildpunkte 93 auch ein Rot-Signalwert R und ein Blau-Signalwert B vorliegen. Hierfür wird ausgenutzt, dass die Rot-Signalwerte R und die Blau-Signalwerte B der Farbbilddaten 31 angesichts der (relativ geringen) zweiten räumlichen Auflösung als Ortsfrequenzwerte einer niedrigen Ortsfrequenz behandelt werden können (ohne dass die Rot-Signalwerte R und die Blau-Signalwerte B notwendigerweise durch eine Frequenzzerlegung erzeugt worden sind). Die weiteren Rot-Signalwerte R und Blau-Signalwerte B können aus den Ergänzungsbilddaten 51 (Ortsfrequenzwerte Ghf mit einer Helligkeitsinformation einer hohen Ortsfrequenz) und aus den Rot-Signalwerten R und Blau-Signalwerten B der Farbbilddaten 31 (entsprechend Ortsfrequenzwerten mit einer jeweiligen Farbinformation einer niedrigen Ortsfrequenz) durch ein Transformieren ermittelt werden, die einer Filterung entspricht, welche die genannten Ortsfrequenzwerte als Eingangswerte verwendet. Hierdurch können letztlich weitere Rot-Signalwerte R und Blau-Signalwerte B interpoliert werden, denen die hohe Ortsfrequenz der Ortsfrequenzwerte Ghf der Ergänzungsbilddaten 51 aufgeprägt wird. Die hierbei erfolgende Vermischung der Farbkanäle (Grün-Farbkanal der Ergänzungsbilddaten 51 mit dem Rot-Farbkanal und dem Blau-Farbkanal der Farbbilddaten 31) ist möglich, da im Wesentlichen nur die (hochfrequente) Helligkeitsinformation des Grün-Farbkanals übernommen wird.

Somit stehen nun erweiterte Farbbilddaten 91 als RGB-Bild mit der relativ hohen vierten räumlichen Auflösung zur Verfügung. Auch die Farbbilddaten 31 mit der relativ geringen zweiten räumlichen Auflösung können angesichts des geringen Bedarfs an Speicher-, Bandbreiten- und Rechenkapazität weiterhin von Nutzen sein. Optional können in einem weiteren jeweiligen Bildbearbeitungsschritt 101, 103 noch eine Farbprozessierung oder sonstige Bearbeitungen durchgeführt werden, die nun auch irreversibel sein dürfen. Schließlich können die bearbeiteten Farbbilddaten 31 und die bearbeiteten erweiterte Farbbilddaten 91 einem jeweiligen Datenspeicher 105, 107 zugeführt werden.

Fig. 6 zeigt ein Kamerasystem mit einer Kamera 113 und zwei Datenspeichern 115, 117. Die Kamera 113 umfasst einen Bildsensor 121 zum Erzeugen von Sensorbilddaten 11, eine Ausleseelektronik 123 zum Steuern des Bildsensors 121 und Auslesen der Sensorbilddaten 11, und eine Signalverarbeitungseinrichtung 125 zum Verarbeiten der Sensorbilddaten 11, wobei die Signalverarbeitungseinrichtung 125 dazu ausgebildet ist, das Verfahren gemäß einer der vorstehend erläuterten Ausführungsformen oder Teile hiervon auszuführen. Der Bildsensor 121 kann, wie erläutert, eine Vielzahl von lichtempfindlichen Sensorelementen umfassen, die in Spalten und Zeilen angeordnet sind, wobei die lichtempfindlichen Sensorelemente mit einer Farbfiltermatrix versehen sind.

Die Kamera 113 umfasst auch die bereits genannte Anzeigeeinrichtung 111, die während einer Aufzeichnung einer Bewegtbildsequenz die bereits erzeugten Farbbilddaten 31 wiedergeben kann.

Der eine Datenspeicher 115 ist innerhalb der Kamera 113 angeordnet (dauerhaft integriert oder als Wechselspeichermedium). In dem Datenspeicher 115 können Farbbilddaten 31 und/oder Ergänzungsbilddaten 51 gespeichert werden und unabhängig voneinander wahlweise über einen Signalausgang 127 ausgelesen werden. Der weitere Datenspeicher 117 ist mit einem Signalausgang 129 der Kamera 113 lösbar verbunden und kann Farbbilddaten 31 und/oder Ergänzungsbilddaten 51 unmittelbar nach deren Erzeugung aufnehmen. Der weitere Datenspeicher 117 kann beispielsweise über ein Kabel, ein lokales Netzwerk (leitungsgebunden oder drahtlos) oder über ein Weitverkehrsnetzwerk (WAN) oder das Internet mit der Kamera 113 wahlweise gekoppelt werden.

### Bezugszeichenliste

- 11: Sensorbilddaten
- 13: Bildpunkt der Sensorbilddaten
- 15: interpolierte Bilddaten
- 17: Farbebene
- 21: Vorverarbeitung
- 23: Interpolation
- 25: Transformation
- 27: Auswahl
- 28: Kombination
- 29: Adaptieren
- 31: Farbbilddaten
- 33: Bildpunkt der Farbbilddaten
- 51: Ergänzungsbilddaten
- 53: Bildpunkt der Ergänzungsbilddaten
- 61: Kompression
- 63: Kompression
- 71: Datenspeicher
- 73: Datenspeicher
- 81: Dekompression
- 83: Dekompression
- 85: Weißabgleichskorrektur
- 87: Aufbereitung
- 91: erweiterte Farbbilddaten
- 93: Bildpunkt der erweiterten Farbbilddaten
- 101: Bildbearbeitung
- 103: Bildbearbeitung
- 105: Datenspeicher
- 107: Datenspeicher
- 111: Anzeigeeinrichtung
- 113: Kamera
- 115: Datenspeicher
- 117: Datenspeicher
- 121: Bildsensor
- 123: Ausleseelektronik
- 125: Signalverarbeitungseinrichtung
- 127: Signalausgang
- 129: Signalausgang
- G: Grün-Signalwert
- R: Rot-Signalwert
- B: Blau-Signalwert
- Glf: Grün-Ortsfrequenzwert einer niedrigen Ortsfrequenz
- Ghf: Grün-Ortsfrequenzwert einer hohen Ortsfrequenz
- Rlf: Rot-Ortsfrequenzwert einer niedrigen Ortsfrequenz
- Blf: Blau-Ortsfrequenzwert einer niedrigen Ortsfrequenz
- IN: Eingangsbilddaten
- LL, LH, HL, HH: Ausgangsbilddaten

## Patentansprüche

1. Verfahren zum Verarbeiten und Speichern von Bilddaten, mit den Schritten:
- Bereitstellen von Sensorbilddaten (11) eines Bildsensors (121) einer Kamera (113), wobei die Sensorbilddaten (11) eine erste räumliche Auflösung besitzen und wenigstens drei Farbkanäle umfassen, wobei die erste räumliche Auflösung einer Anzahl von ersten Bildpunkten (13) entspricht und die Sensorbilddaten (11) für jeden der ersten Bildpunkte (13) nur einen Signalwert (G, R, B) aus einem der wenigstens drei Farbkanäle der Sensorbilddaten (11) umfassen;
- basierend auf den Sensorbilddaten (11) Erzeugen von Farbbilddaten (31), die einer zweiten räumlichen Auflösung entsprechen und wenigstens drei Farbkanäle umfassen, wobei die zweite räumliche Auflösung einer Anzahl von zweiten Bildpunkten (33) entspricht und die Farbbilddaten (31) für jeden der zweiten Bildpunkte (33) wenigstens drei Signalwerte (G, R, B) gemäß den wenigstens drei Farbkanälen der Farbbilddaten (31) umfassen, wobei die zweite räumliche Auflösung der Farbbilddaten (31) geringer ist als die erste räumliche Auflösung der Sensorbilddaten (11);
- basierend auf den Sensorbilddaten (11) Erzeugen von Ergänzungsbilddaten (51), die einer dritten räumlichen Auflösung entsprechen und nur einen einzigen Farbkanal umfassen, wobei die dritte räumliche Auflösung einer Anzahl von dritten Bildpunkten (53) entspricht und die Ergänzungsbilddaten (51) für jeden der dritten Bildpunkte (53) nur einen Signalwert (G) gemäß dem einzigen Farbkanal der Ergänzungsbilddaten (51) umfassen; und
- Speichern der Farbbilddaten (31) und der Ergänzungsbilddaten (51) derart, dass auf die Farbbilddaten (31) unabhängig von den Ergänzungsbilddaten (51) zugegriffen werden kann.

2. Verfahren nach Anspruch 1,
ferner mit dem Schritt:
- Erzeugen der Sensorbilddaten (11) mittels eines Bildsensors (121) einer Kamera (113), der eine Vielzahl von lichtempfindlichen Sensorelementen umfasst, die in Spalten und Zeilen angeordnet sind.

3. Verfahren nach Anspruch 1 oder 2,
wobei die Sensorbilddaten (11) einer Bewegtbildsequenz zugeordnet sind, wobei während eines Erzeugens von weiteren Sensorbilddaten (11) der Bewegtbildsequenz bereits erzeugte Farbbilddaten (31) an einer Anzeigeeinrichtung (111) der Kamera (113) wiedergegeben werden;
und/oder
wobei die dritte räumliche Auflösung der Ergänzungsbilddaten (51) höher ist als die zweite räumliche Auflösung der Farbbilddaten (31);
und/oder
wobei die dritte räumliche Auflösung der Ergänzungsbilddaten (51) geringer ist als die erste räumliche Auflösung der Sensorbilddaten (11).

4. Verfahren nach einem der vorstehenden Ansprüche,
wobei die Farbbilddaten (31) niedrigen Ortsfrequenzen der Sensorbilddaten (11) entsprechen und die Ergänzungsbilddaten (51) hohen Ortsfrequenzen der Sensorbilddaten (11) entsprechen;
und/oder
wobei die Signalwerte (G) gemäß dem einzigen Farbkanal der Ergänzungsbilddaten (51) und die Signalwerte (G) gemäß demjenigen Farbkanal der Farbbilddaten (31), welcher dem einzigen Farbkanal der Ergänzungsbilddaten (51) entspricht, gemeinsam im Wesentlichen den Informationsgehalt des Farbkanals der Sensorbilddaten (11) umfassen, welcher dem einzigen Farbkanal der Ergänzungsbilddaten (51) entspricht.

5. Verfahren nach einem der vorstehenden Ansprüche,
wobei der Schritt des Erzeugens der Farbbilddaten (31) basierend auf den Sensorbilddaten (11) die folgenden Verarbeitungsschritte umfasst:
- Interpolieren der Sensorbilddaten (11), um für jeden der ersten Bildpunkte (13) wenigstens zwei weitere Signalwerte (G, R, B) zu ermitteln, so dass für jeden der ersten Bildpunkte (13) und für jeden der wenigstens drei Farbkanäle der Sensorbilddaten (11) ein jeweiliger Signalwert (G, R, B) vorliegt;
- für jeden der wenigstens drei Farbkanäle der Sensorbilddaten (11) Transformieren der Signalwerte (G, R, B) einschließlich der interpolierten Signalwerte in Ortsfrequenzwerte, die niedrigen und hohen Ortsfrequenzen entsprechen, vorzugsweise durch eine diskrete Wavelet-Transformation; und
- Ermitteln der Farbbilddaten (31) für jeden der wenigstens drei Farbkanäle der Farbbilddaten (31) durch Auswählen von niedrigen Ortsfrequenzen entsprechenden Ortsfrequenzwerten (Glf, Rlf, Blf); und
wobei der Schritt des Erzeugens der Ergänzungsbilddaten (51) basierend auf den Sensorbilddaten (11) den folgenden Verarbeitungsschritt umfasst:
- Ermitteln der Ergänzungsbilddaten (51) für den einzigen Farbkanal der Ergänzungsbilddaten (51) durch Auswählen von hohen Ortsfrequenzen entsprechenden Ortsfrequenzwerten (Ghf).

6. Verfahren nach einem der Ansprüche 1 bis 4,
wobei der Schritt des Erzeugens der Farbbilddaten (31) basierend auf den Sensorbilddaten (11) die folgenden Verarbeitungsschritte umfasst:
- für nur einen ersten Farbkanal der wenigstens drei Farbkanäle der Sensorbilddaten (11), der dem genannten einzigen Farbkanal der Ergänzungsbilddaten (51) entspricht, Interpolieren der Sensorbilddaten (11), um für diejenigen der ersten Bildpunkte, für die noch kein Signalwert gemäß dem ersten Farbkanal vorliegt, einen Signalwert (G) gemäß dem ersten Farbkanal zu ermitteln;
- für den ersten Farbkanal der Sensorbilddaten (11) Transformieren der Signalwerte (G) einschließlich der interpolierten Signalwerte in Ortsfrequenzwerte, die niedrigen und hohen Ortsfrequenzen entsprechen;
- Ermitteln der Farbbilddaten (31) für einen ersten Farbkanal der wenigstens drei Farbkanäle der Farbbilddaten (31), der dem ersten Farbkanal der Sensorbilddaten (11) entspricht, durch Auswählen von niedrigen Ortsfrequenzen entsprechenden Ortsfrequenzwerten (Glf) des ersten Farbkanals; und
- Ermitteln der Farbbilddaten (31) für die weiteren der wenigstens drei Farbkanäle der Farbbilddaten (31) durch Adaptieren der Signalwerte (R, B) gemäß den weiteren der wenigstens drei Farbkanäle der Sensorbilddaten (11) auf Bildpunktpositionen, die den Farbbilddaten (31) des ersten Farbkanals entsprechen, wobei das Adaptieren der Signalwerte (R, B) vorzugsweise durch eine räumliche Filterung erfolgt, welche Signalwerte (R, B) des jeweiligen weiteren Farbkanals der Sensorbilddaten (11) an benachbarten Bildpunktpositionen und Signalwerte (G) des ersten Farbkanals der Sensorbilddaten (11) an benachbarten Bildpunktpositionen berücksichtigt; und
wobei der Schritt des Erzeugens der Ergänzungsbilddaten (51) basierend auf den Sensorbilddaten (11) den folgenden Verarbeitungsschritt umfasst:
- Ermitteln der Ergänzungsbilddaten (51) für den einzigen Farbkanal der Ergänzungsbilddaten (51) durch Auswählen von hohen Ortsfrequenzen entsprechenden Ortsfrequenzwerten (Ghf).

7. Verfahren nach einem der vorstehenden Ansprüche,
wobei vor dem Schritt des Erzeugens von Farbbilddaten (31) wenigstens einer der folgenden Schritte durchgeführt wird:
- Korrigieren einzelner Sensorbilddaten (11), die defekten oder stark abweichenden Sensorelementen des Bildsensors (121) entsprechen;
- Durchführen einer nicht-linearen Transformation der Sensorbilddaten (11) innerhalb eines jeden der wenigstens drei Farbkanäle der Sensorbilddaten (11); oder
- Durchführen eines Weißabgleichs zwischen den wenigstens drei Farbkanälen der Sensorbilddaten (11).

8. Verfahren nach einem der vorstehenden Ansprüche,
wobei die Farbbilddaten (31) vor dem Speichern gemäß einem ersten Kompressionsverfahren komprimiert werden, und wobei die Ergänzungsbilddaten (51) vor dem Speichern gemäß einem zweiten, von dem ersten Kompressionsverfahren verschiedenen Kompressionsverfahren komprimiert werden;
wobei das erste Kompressionsverfahren vorzugsweise ein temporales Kompressionsverfahren und das zweite Kompressionsverfahren vorzugsweise ein nicht-temporales Kompressionsverfahren ist.

9. Verfahren nach einem der vorstehenden Ansprüche,
wobei eine zumindest zweistufige Rauschreduzierung durchgeführt wird,
wobei vor den Schritten des Erzeugens von Farbbilddaten (31) und des Erzeugens von Ergänzungsbilddaten (51) eine erste Rauschreduzierung an den Sensorbilddaten (11) durchgeführt wird, und
wobei nach den Schritten des Erzeugens von Farbbilddaten (31) und des Erzeugens von Ergänzungsbilddaten (51) und vor dem Schritt des Speicherns der Farbbilddaten (31) und der Ergänzungsbilddaten (51) eine zweite Rauschreduzierung an den Farbbilddaten (31) und an den Ergänzungsbilddaten (51) durchgeführt wird;
wobei für die an den Farbbilddaten (31) und/oder den Ergänzungsbilddaten (51) bezüglich hoher Ortsfrequenzen durchgeführte Rauschreduzierung vorzugsweise eine in niedrigen Ortsfrequenzen enthaltene Information über vorhandene Strukturen berücksichtigt wird.

10. Verfahren nach einem der vorstehenden Ansprüche,
wobei die Farbbilddaten (31) und die Ergänzungsbilddaten (51) in unterschiedlichen Datenspeichern (71, 73) gespeichert werden;
und/oder
wobei die Sensorbilddaten (11) von einem Bildsensor (121) einer Kamera (113) erzeugt werden, wobei die Farbbilddaten (31) und die Ergänzungsbilddaten (51) in einem Datenspeicher (115) der Kamera (113) oder in einem über eine lokale Datenverbindung mit der Kamera (113) verbundenen Datenspeicher (117) gespeichert werden, und wobei lediglich die Farbbilddaten (31) zusätzlich über ein Weitverkehrsnetzwerk oder das Internet in einem Cloud-Speicher gespeichert werden.

11. Verfahren nach einem der vorstehenden Ansprüche,
wobei die Farbbilddaten (31) und die Ergänzungsbilddaten (51) Metadaten umfassen, die ein gegenseitiges Zuordnen von Bilddatensätzen der Farbbilddaten (31) und Bilddatensätzen der Ergänzungsbilddaten (51) ermöglichen, die einem einzigen Bilddatensatz der Sensorbilddaten (11) entsprechen;
und/oder
wobei die Farbbilddaten (31) und die Ergänzungsbilddaten (51) in verschlüsselter Form gespeichert werden, wobei die Farbbilddaten (31) mit einem ersten Schlüssel verschlüsselt sind und die Ergänzungsbilddaten (51) mit einem von dem ersten Schlüssel verschiedenen zweiten Schlüssel verschlüsselt sind.

12. Verfahren nach einem der vorstehenden Ansprüche,
wobei die Farbbilddaten (31) unter Verwendung der Ergänzungsbilddaten (51) in erweiterte Farbbilddaten (91) umgewandelt werden, die einer vierten räumlichen Auflösung entsprechen und wenigstens drei Farbkanäle umfassen, wobei die vierte räumliche Auflösung einer Anzahl von vierten Bildpunkten (93) entspricht und die erweiterten Farbbilddaten (91) für jeden der vierten Bildpunkte wenigstens drei Signalwerte (G, R, B) gemäß den wenigstens drei Farbkanälen der erweiterten Farbbilddaten (91) umfassen, wobei die vierte räumliche Auflösung der erweiterten Farbbilddaten (91) höher ist als die zweite räumliche Auflösung der Farbbilddaten (31).

13. Verfahren nach Anspruch 12,
wobei das Umwandeln der Farbbilddaten (31) in erweiterte Farbbilddaten (91) unter Verwendung der Ergänzungsbilddaten (51) die folgenden Schritte umfasst:
- Ermitteln weiterer Signalwerte (G) eines ersten Farbkanals der wenigstens drei Farbkanäle der Farbbilddaten (31), welcher dem genannten einzigen Farbkanal der Ergänzungsbilddaten (51) entspricht, so dass für jeden der vierten Bildpunkte (93) ein Signalwert (G) gemäß dem ersten Farbkanal der Farbbilddaten (31) vorliegt, wobei diese weiteren Signalwerte (G) aus den Ergänzungsbilddaten (51) und aus Signalwerten (G) des ersten Farbkanals der Farbbilddaten (31) durch ein Transformieren von Ortsfrequenzwerten in weitere Signalwerte oder durch ein Verwenden der Ergänzungsbilddaten (51) als zusätzliche Signalwerte ermittelt werden;
- Ermitteln weiterer Signalwerte (R, B) der weiteren Farbkanäle der wenigstens drei Farbkanäle der Farbbilddaten (31), so dass für jeden der vierten Bildpunkte (93) Signalwerte (R, B) gemäß den weiteren Farbkanälen der Farbbilddaten (31) vorliegen, wobei diese weiteren Signalwerte (R, B) aus den Ergänzungsbilddaten (51) und aus den Signalwerten (R, B) der weiteren Farbkanäle der Farbbilddaten (31) durch ein Transformieren von Ortsfrequenzwerten in weitere Signalwerte oder durch ein Interpolieren von Signalwerten (R, B) der weiteren Farbkanäle der Farbbilddaten (31) ermittelt werden.

14. Verfahren nach Anspruch 12,
wobei das Umwandeln der Farbbilddaten (31) in erweiterte Farbbilddaten (91) unter Verwendung der Ergänzungsbilddaten (51) die folgenden Schritte umfasst:
- Einspeisen der Farbbilddaten (31) und der Ergänzungsbilddaten (51) in ein neuronales Netzwerk; und
- Erzeugen der erweiterten Farbbilddaten (31) durch das neuronale Netzwerk.

15. Kamerasystem mit einer Kamera (113) und wenigstens einem Datenspeicher (115, 117),
wobei die Kamera (113) einen Bildsensor (121) zum Erzeugen von Sensorbilddaten (11) und eine Signalverarbeitungseinrichtung (125) zum Verarbeiten der Sensorbilddaten (11) aufweist, wobei der wenigstens eine Datenspeicher (115, 117) mit der Kamera (113) verbunden oder koppelbar ist, und wobei die Signalverarbeitungseinrichtung (125) zur Ausführung des Verfahrens nach einem der vorstehenden Ansprüche ausgebildet ist.
